# EUROPEAN PATENT APPLICATION

(11) **EP 1 947 730 A1**
(43) Date of publication of application: **23.07.2008**
(21) Application number: 06811203.6
(22) Date of filing: 04.10.2006
(51) Int. Cl.: H01M 14/00, H01L 31/04

(54) **PHOTOELECTRIC CONVERSION ELEMENT AND SOLAR CELL USING SAME**

(30) Priority: 07.10.2005 JP 2005295509; 03.10.2006 JP 2006271866
(71) Applicant: Sharp Kabushiki Kaisha, Osaka-shi, Osaka 545-8522 (JP)
(72) Inventor: CHIBA, Yasuo, NARA 639-0225 (JP); HAN, Liyuan, NARA 635-0833 (JP); KOIDE, Naoki, NARA 634-0043 (JP); KIDO, Masami, NARA 635-0074 (JP)
(74) Representative: Müller - Hoffmann & Partner
(86) International application number: PCT/JP2006/319863
(87) International publication number: WO 2007/043408

(57) **Abstract**

A photovoltaic cell having improved photoelectric conversion efficiency is provided. Furthermore, a solar cell employing such a photovoltaic cell is also provided. The photovoltaic cell is composed of a photoelectric conversion layer (31) made of a porous semiconductor layer (11) that has adsorbed a dye, a carrier transporting layer (4), and a pair of electrodes (3, 7). A total haze ratio of the porous semiconductor layer (11) of the photoelectric conversion layer (31) in a near infrared region is 60% or more to 95% or less. Especially when the porous semiconductor layer (11) is made of a plurality of layers, the haze ratio of the porous semiconductor layer in the near infrared region that is furthest from a light incident side is preferably 60% or more to 95% or less.

## Description

### TECHNICAL FIELD

The present invention relates to a photovoltaic cell and a solar cell using the same.

### BACKGROUND ART

Public attentions have been drawn to a solar cell that utilizes sun light as an energy source that will replace fossil fuels, and various studies have been made in this field. At present, the solar cells that have been put into practical use are mainly composed of single-crystal, polycrystal and amorphous silicon; however, these materials cause high material costs and high energy costs in manufacturing processes, resulting in a big obstacle in the spread of solar cells.

As a solar cell of a new type, Japanese Patent Laying-Open No. 1-220380 (Patent Document 1), International Patent Publication No. WO94/05025 (Patent Document 2), etc. have disclosed a dye-sensitized solar cell as a photovoltaic cell in which photo-induced electron transfer of a metallic complex is utilized.

These dye-sensitized solar cells are provided with a photoelectric conversion layer configured by a porous semiconductor layer that adsorbs a dye, a carrier transporting layer and a pair of electrodes. To the porous semiconductor layer, a bipyridine ruthenium complex is adsorbed as a sensitizing dye having an absorbing spectrum in a visible light region.

In these cells, upon application of light to a photoelectric conversion layer configured by a porous semiconductor layer and a dye, electrons in the dye are excited so that the electrons are allowed to move toward the opposing electrode through an external circuit. The electrons, thus moved to the opposing electrode, are carried by ions in an electrolyte serving as a carrier transporting layer, and returned to the photoelectric conversion layer. By repeating these processes, electric energy is taken out. However, at present, in comparison with silicon solar cells, the dye-sensitized solar cell is still in a low level in its photoelectric conversion efficiency.

Under these circumstances, Japanese Patent Laying-Open No. 2000-106222 (Patent Document 3) has disclosed a technique in which by adding particles having different particle-size distributions to a porous semiconductor layer to be mixed therein, the improvement of the photoelectric conversion efficiency is aimed.

Moreover, Japanese Patent Laying-Open No. 10-255863 (Patent Document 4) has disclosed a technique in which by laminating two titanium oxide layers, the improvement of the photoelectric conversion efficiency is aimed.

Moreover, Japanese Patent Laying-Open No. 2002-222968 (Patent Document 5) has disclosed a technique in which by laminating porous semiconductor layers made from particles whose particle sizes are varied, the improvement of the photoelectric conversion efficiency is aimed.

Furthermore, Japanese Patent Laying-Open No. 2003-217689 (Patent Document 6) has disclosed a technique in which by controlling the haze ratio in a visible light region, the improvement of the photoelectric conversion efficiency is aimed.
Patent Document 1: Japanese Patent Laying-Open No. 1-220380
Patent Document 2: International Patent Publication No. WO94/05025
Patent Document 3: Japanese Patent Laying-Open No. 2000-106222
Patent Document 4: Japanese Patent Laying-Open No. 10-255863
Patent Document 5: Japanese Patent Laying-Open No. 2002-222968
Patent Document 6: Japanese Patent Laying-Open No. 2003-217689

### DISCLOSURE OF THE INVENTION

### PROBLEMS TO BE SOLVED BY THE INVENTION

However, the methods of Patent Documents 3 to 6 have raised the following problems. In general, when particles of an oxide semiconductor are heated, the particles grow as the temperature rises. Moreover, it has been known that the particles are mutually combined with one another to form large aggregates. That is, even in a case where particles whose particle size has been controlled are used to produce a porous semiconductor layer, since the particles become extremely large during its heating process, the particle-size distribution of the porous semiconductor layer and the subsequent optical characteristics thereof are not necessarily determined univocally.

For this reason, even when, as shown in Patent Document 3, only the titanium oxide particle size in a material solution (or suspension) for a porous semiconductor layer is measured by a SEM, an X-ray diffraction method or the like, and determined, the particle size distribution of a semiconductor after the formation of the porous semiconductor layer differs depending on the formation conditions of the porous semiconductor layer, with the result that it is not necessarily possible to obtain high photoelectric conversion efficiency.

In Patent Document 4 as well, since an optical reflection particle layer is formed by using a material solution (or suspension) in which only the titanium oxide particle size has been determined, the particle distribution in the optical reflection particle layer after the formation becomes undetermined, and the optical reflectance thereof is not determined univocally. Consequently, it is not necessarily possible to obtain high photoelectric conversion efficiency.

Moreover, Patent Document 4 describes "the particle size (of titanium oxide in the suspension) is controlled to a range from about 200 nm to 500 nm so as to maximize light scattering" and also describes that the particle size is set to "1.3 × π/K with respect to light wavelength K". These two points indicate that in Patent Document 4, "light" to be used for improving the photoelectric conversion efficiency relates to light rays within a wavelength range including a visible light region of about 310 to 770 nm and one portion of ultraviolet rays.

Moreover, in Patent Document 5, by specifying the particle size of semiconductor particles contained in a material solution (or suspension) for a porous semiconductor layer, the scattering property of the porous semiconductor layer within a visible light region is consequently specified so as to improve the photoelectric conversion efficiency; however, the optical characteristics (scatting characteristic in this case) differ depending on the formation conditions of the porous semiconductor layer as described above, and the photoelectric conversion efficiency also varies depending to the formation conditions.

Patent Document 6 introduces the concept of haze ratio in a visible light region to the formation of a porous semiconductor layer. Although this method is effective to improve the conversion efficiency by the improvement in quantum efficiency within the visible light region, it is not possible to achieve higher conversion efficiency.

### MEANS FOR SOLVING THE PROBLEMS

In an attempt to improve characteristics of a porous semiconductor layer so as to realize a photovoltaic cell having high efficiency, the inventors of the present invention have directed their attention to optical characteristics in a near infrared region of the porous semiconductor layer, and found that by specifying the haze ratio in a near infrared region of the semiconductor, it is possible to obtain a photovoltaic cell having superior photoelectric conversion efficiency, and consequently, the present invention is achieved. Specifically, in accordance with the present invention,
(1) there is provided a photovoltaic cell including: a photoelectric conversion layer made of a porous semiconductor layer with dye; a carrier transporting layer; and a pair of electrodes, wherein the porous semiconductor layer of the photoelectric conversion layer has a haze ratio in a near infrared region ranging from 60% to 95%.
(2) Further, there is provided the photovoltaic cell according to the above (1), wherein the porous semiconductor layer is made of a plurality of layers having different haze ratios in the near infrared region.
(3) There is also provided the photovoltaic cell according to the above (2), wherein the porous semiconductor layer includes layers arranged such that the haze ratios in the near infrared region are successively increased from a light incident side.
(4) Further, there is provided the photovoltaic cell according to the above (3), wherein in the porous semiconductor layer made of the plurality of layers, the layer in the porous semiconductor layer located farthest from the light incident side has a haze ratio in the near infrared region ranging from 60% to 95%.
(5) There is also provided the photovoltaic cell according to the above (4), wherein the porous semiconductor layer is made of three layers and the layer in the porous semiconductor layer located closest to the light incident side has a haze ratio in the near infrared region of 1% or more and less than 11 %, while the layer in the porous semiconductor layer located farthest from the light incident side has a haze ratio in the near infrared region ranging from 60% to 95%.
(6) Further, there is provided the photovoltaic cell according to the above (4), wherein the porous semiconductor layer is made of four layers and the layer in the porous semiconductor layer located closest to the light incident side has a haze ratio in the near infrared region of 1% or more and less than 11%, while the layer in the porous semiconductor layer located farthest from the light incident side has a haze ratio in the near infrared region ranging from 60% to 95%.
(7) There is also provided the photovoltaic cell according to any one of the above (1) to (6), wherein the porous semiconductor layer is made of an oxide semiconductor mainly composed of titanium oxide.
(8) Further, there is provided the photovoltaic cell according to any one of the above (1) to (7), wherein the haze ratio is a value measured by using any one of wavelengths in a range from 780 nm to 900 nm.
(9) Further, there is provided a solar cell which uses the photovoltaic cell according to any one of the above (1) to (8).

### EFFECTS OF THE INVENTION

In accordance with the present invention, in a photovoltaic cell having a photoelectric conversion layer made of a porous semiconductor layer that adsorbs a dye, a carrier transporting layer and a pair of electrodes, the total haze ratio in a near infrared region of the porous semiconductor layer is set in a range from 60% to 95% so that the photoelectric conversion efficiency of the photovoltaic cell is improved. In particular, when the porous semiconductor layer is made of the plurality of layers, the layer in the porous semiconductor layer located farthest from the light incident side is designed to have a haze ratio in a near infrared region ranging from 60% to 95% so that the photoelectric conversion efficiency of the photovoltaic cell is improved.

### BRIEF DESCRIPTION OF THE DRAWINGS

Fig. 1 is a cross-sectional view showing a structure of a photovoltaic cell manufactured in embodiments, which is a preferable photovoltaic cell of the present invention.
Fig. 2 is a cross-sectional view showing a structure of a photovoltaic cell having a photoelectric conversion layer made of three layers.
Fig. 3 is a cross-sectional view showing a structure of a photovoltaic cell having a photoelectric conversion layer made of four layers.
Fig. 4 is a cross-sectional view showing a structure of a photovoltaic cell having a photoelectric conversion layer made of five layers.
Fig. 5 is a schematic cross-sectional view showing a preparing process for a sample used for measuring a haze ratio.
Fig. 6 is a schematic cross-sectional view showing another preparing process for a sample used for measuring a haze ratio.
Fig. 7 is a schematic view showing a measuring system used for measuring a haze ratio.

### DESCRIPTION OF THE REFERENCE SIGNS

1 Supporting member, 2 Conductive layer, 3, 7 Electrode, 4 Carrier transporting layer, 5 Substrate, 6 Conductive layer, 11, 11a, 11b, 11c, 11d, 11e Porous semiconductor layer, 21 Spacer, 22 Sealing member, 31 Photoelectric conversion layer, 41, 42 Cut-off face, 51 Light source, 52 Wavelength selection device, 53 Measuring sample, 54 Detector, 55 Reflection plate, 56 Slit, 61 Light ray, 62 Incident light, 63 Parallel transmission light, 64 Diffusing transmission light, 65 Total light ray transmission light

### BEST MODES FOR CARRYING OUT THE INVENTION

The following description will discuss preferred embodiments of the present invention. However, the following description is exemplary only, and various modifications may be made therein within the scope of the present invention.

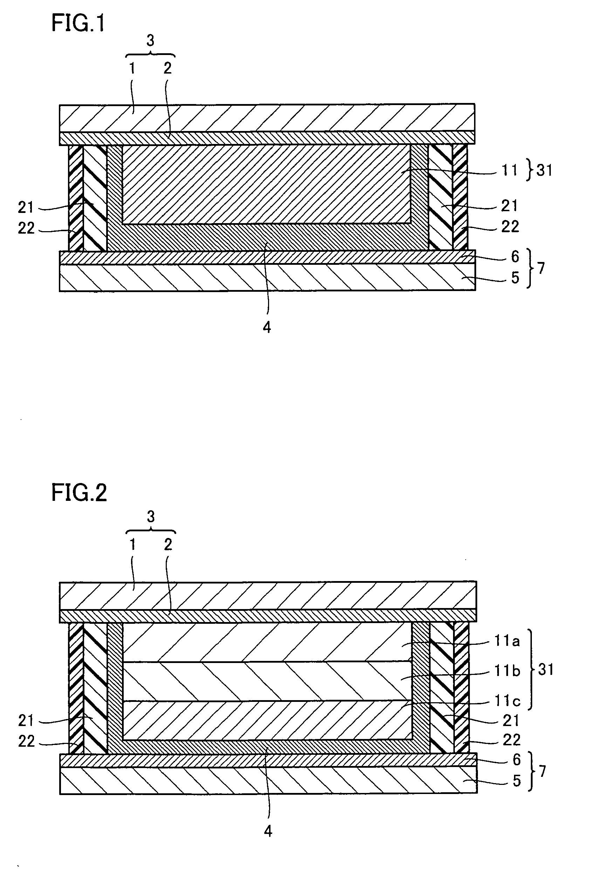

Referring to Fig. 1, the following description will discuss embodiments of the present invention. Fig. 1 is a cross-sectional view showing a structure of a photovoltaic cell manufactured in embodiments, which is a preferable photovoltaic cell of the present invention. That is, Fig. 1 shows a photovoltaic cell of a dye sensitizing type. In the photovoltaic cell shown in Fig. 1, a photoelectric conversion layer 31, made of a porous semiconductor layer 11 which adsorbs a dye, is formed on an electrode 3 made of a conductive supporting member, and a carrier transporting layer 4 is interposed between electrode 3 made of the conductive supporting member and an electrode 7 made of a supporting member on an opposing electrode side, with the side faces being sealed by a spacer 21 and a sealing member 22.

Photoelectric conversion layer 31 is made of a single or a plurality of porous semiconductor layers 11 and a dye adsorbed thereto. In the present invention, the "porous semiconductor layer" refers to a semiconductor layer containing a number of pores (that is, voids).

The following description will discuss respective members to be used for the photovoltaic cell of Fig. 1.

### (Conductive Supporting Member)

The conductive supporting member to be formed as electrode 3 of the present invention is formed by placing a transparent conductive layer, such as indium tin oxide (ITO), tin oxide (SnO₂) and zinc oxide (ZnO), serving as a conductive layer 2, on a supporting member 1 made of a transparent substrate such as a glass plate and a plastic sheet.

### (Haze Ratio)

The porous semiconductor layer of the present invention is characterized in that it exerts a predetermined haze ratio in the near infrared region. First, the haze ratio will be described. In general, the haze ratio is a value obtained by dividing a diffusion transmittance obtained when a light ray having spectrum in the visible light region and/or the near infrared region (for example, standard light source D65 and standard light source C) is made incident on a measuring sample, by a total light ray transmittance, and indicated by a value between 0 to 1 or a percentage from 0 to 100%.

In the present invention, independent of conditions of porous semiconductor layer 11 such as the number of layers and the thickness of a layer, upon measuring a haze ratio of porous semiconductor layer 11 as a whole (hereinafter, referred to as "total haze ratio"), a total light ray transmittance and a diffusion transmittance may be measured when light is made incident on the incident side of light in a photovoltaic cell, that is, when light is made incident on the electrode 3 side made of the conductive supporting member. This measuring process is easily carried out when there is a device having a light source and a light quantity measuring unit (for example, a device in which an integrating sphere made tightly in contact with a measuring sample is prepared, with a light trap (dark box) or a standard plate being placed on the side of the integrating sphere opposite to the measuring sample). That is, in a state with the standard plate being set, the light quantity T1 of an incident light ray without the sample and the light quantity T2 of total light ray transmission light with the sample are measured, and with the light trap being set, the light quantity T3 of diffusion light from the device without the sample and the light quantity T4 of diffusion transmission light with the sample are measured so that by calculating the total light ray transmittance Tt = T2/T1 and the diffusion transmittance Td = [T4 - T3(T2/T1)]/T1, the haze ratio H = Td/Tt is obtained.

In general, the spectral sensitivity of a dye-sensitized solar cell is dependent on the spectrum of the dye. For example, upon application of Black Dye (made by Solaronix Co., Ltd. ruthenium 620-1H3TBA, tris(isothiocyanate)-ruthenium (II)-2,2':6',2"- terpyridine-4,4',4"-tricarboxyl acid tris-tetrabutyl ammonium salt) as the dye, the highest quantum efficiency is exerted in a wavelength region near 600 nm; however, in the wavelength region above this, the quantum efficiency is lowered as the wavelength becomes longer. Patent Document 6 indicates that by improving the haze ratio in the visible light region, the quantum efficiency can be improved in the wavelength region up to 700 nm so that the conversion efficiency of a dye-sensitized solar cell is improved.

In order to obtain higher conversion efficiency, it is considered that improving the quantum efficiency in the longer wavelength range is essential.

That is, in the dye-sensitized solar cell, since one portion of incident photons in the long wavelength range is not absorbed sufficiently by photoelectric conversion layer 31, and allowed to pass therethrough, the quantum efficiency in the near infrared region is low to cause the fact that the photoelectric conversion efficiency of a dye-sensitized solar cell is still low. The inventors of the present invention have found that porous semiconductor layer 11 having a high haze ratio in the near infrared region is effectively used so as to confine the transmission light in the near infrared region into the photoelectric conversion layer 31.

In the present invention, "visible light region" is defined as a region from 380 nm to 780 nm, and "near infrared region" is defined as a region from 780 nm to 1200 nm. Moreover, the haze ratio in the near infrared region, defined in the present invention, means a haze ratio in any one of wavelengths within the near infrared region as defined above.

In the present invention, the total haze ratio in the near infrared region of the total porous semiconductor layer is set to 60% or more. In a case of the haze ratio of 60% or more, the light confining effect into the photoelectric conversion layer 31 is sufficiently obtained so that a photovoltaic cell that exerts sufficiently high photoelectric conversion efficiency can be obtained. The haze ratio is preferably set to 70% or more. In contrast, the total haze ratio in the near infrared region of the porous semiconductor layer is set to 95% or less. The haze ratio of 95% or less ensures a sufficient amount of dye adsorption. Moreover, within the near infrared region, in any one of the wavelengths in a range from 780 nm to 900 nm, the total haze ratio of the porous semiconductor is set to 60% or more, more preferably, to 70% or more, and to 95% or less.

Since the sun light spectrum has a high irradiation energy intensity at AM1.5 ranging from the visible light region to 900 nm, the value of the haze ratio of the porous semiconductor layer in the near infrared region to be controlled in the present invention is preferably set to a value of the haze ratio, in particular, in any one of wavelengths from 780 nm to 900 nm.

Fig. 2 is a cross-sectional view showing a structure of a photovoltaic cell having a photoelectric conversion layer made of three layers. Fig. 2 shows a structure in which a photoelectric conversion layer 31 made of three porous semiconductor layers 11a, 11b and 11c is used as photoelectric conversion layer 31 made of porous semiconductor layers 11. In the present invention, a porous semiconductor layer 11 made of a single layer having a uniform haze ratio may be used; however, a porous semiconductor layer 11, made of a plurality of layers having different haze ratios, such as, for example, porous semiconductor layers 11a, 11b and 11c as shown in Fig. 2, is more preferably used because it has a higher light confining effect and exerts higher photoelectric conversion efficiency.

Moreover, in a case where porous semiconductor layer 11, made of a plurality of layers having different haze ratios, for example, such as porous semiconductor layers 11a, 11b and 11c, porous semiconductor layer 11, which has an increasing haze ratio in the near infrared region successively from the light incident side is preferable. The following description will discuss the reasons for this structure.

In general, a porous semiconductor layer having a low haze ratio has a higher amount of dye adsorption, but exerts only a small light confining effect. In contrast, a porous semiconductor layer having a high haze ratio tends to have large particles and large voids; therefore, it exerts a higher light confining effect, although its amount of dye adsorption is low. For this reason, for example, by placing a porous semiconductor layer having a low haze ratio on the light incident side as indicated by porous semiconductor layer 11a of Fig. 2, with a porous semiconductor layer having a high haze ratio being placed on a position farther from the light irradiation side, for example, as indicated by porous semiconductor layer 11c, it becomes possible to allow light rays diffused and reflected by the layer having a high haze ratio to be re-absorbed by many dyes adsorbed on the layer having a low haze ratio. As a result, the light confining effect is improved so that high photoelectric conversion efficiency can be obtained. Therefore, in order to further improve the light confining effect, it is particularly important to raise the haze ratio of the layer in the porous semiconductor layer located farthest from the light incident side (for example, porous semiconductor layer 11c in Fig. 2). The haze ratio in the near infrared region of the layer in the porous semiconductor layer located farthest from the light incident side is preferably set in a range from 60% to 95%. More preferably, the haze ratio is set in a range from 70% to 95%.

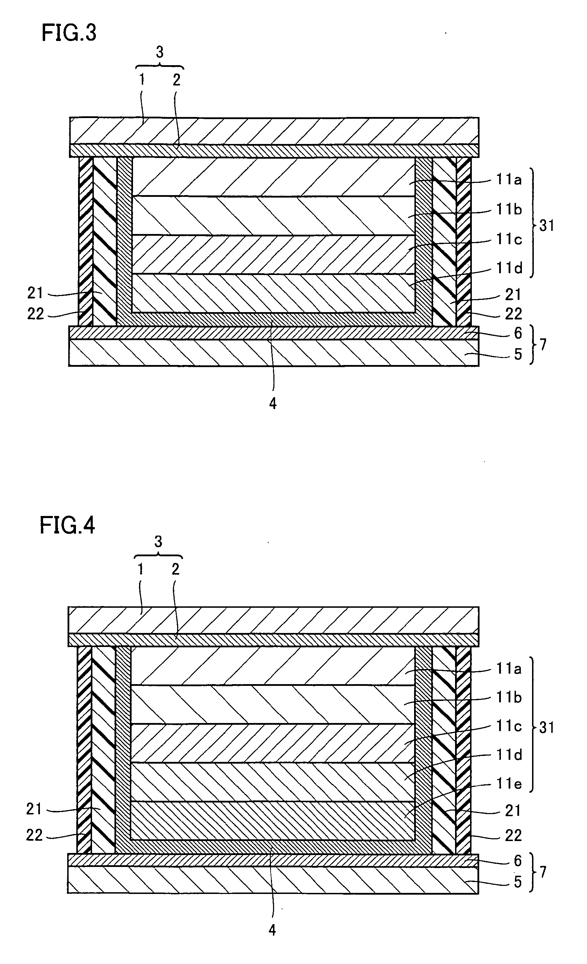

In the present invention, in a case where porous semiconductor layer 11 is made of a plurality of layers, the number of the layers of porous semiconductor layer 11 is preferably set to two layers or more, more preferably, to three layers or more, most preferably, to three layers or four layers. A multiple layer structure of five layers or more makes it possible to further improve the photoelectric conversion efficiency. In this case, however, since the multiple layer structure causes an increase in the manufacturing costs, the number of layers can be determined on demand, while comparing the improvement rate of the photoelectric conversion efficiency with the manufacturing costs of the element. Fig. 3 is a cross-sectional view showing a photovoltaic cell having a photoelectric conversion layer made of four layers, and Fig. 4 is a cross-sectional view showing a photovoltaic cell having a photoelectric conversion layer made of five layers. Fig. 3 shows a structure in which photoelectric conversion layer 31 is made of four porous semiconductor layers 11a, 11b, 11c and 11d, and Fig. 4 shows a structure in which photoelectric conversion layer 31 is made of five porous semiconductor layers 11a, 11b, 11c, 11d and 11e.

In the present invention, it is in particular preferable to design a plurality of porous semiconductor layers so that the haze ratios thereof in the near infrared region are successively increased from the light incident face side. For example, in a case where the number of porous semiconductor layers 11 is three or four, preferably, the haze ratio in the near infrared region of the layer in the porous semiconductor layer located closest to the light incident side is set to 1% or more and less than 11%, the haze ratios of the intermediate porous semiconductor layers between the layer in the porous semiconductor layer located closest to the incident side and the layer in the porous semiconductor layer located farthest from the incident side are made to gradually increase in accordance with the distance from the incident side, and the haze ratio of the layer in the porous semiconductor layer located farthest from the incident side is set to 60% or more to 95% or less. More specifically, for example, in a case where the number of porous semiconductor layers 11 is three, the haze ratio in the near infrared region is successively increased from the layer located closest to the incident side so that the haze ratio of the first layer is set to 1% or more and less than 11 %, that of the second layer is set to 2% or more and less than 70%, and that of the third layer is set to 3% or more to 95% or less, with the total haze ratio of the porous semiconductor layer 11 being set to 60% or more to 95% or less. Moreover, preferably, the haze ratio in the first layer is 1% or more and less than 11 %, that in the second layer is 11 % or more and less than 70%, and that in the third layer is 70% or more to 95% or less.

The following description will discuss the evaluation method for the haze ratio of porous semiconductor layer 11 of the present invention. The haze ratio of the porous semiconductor layer can be measured by a method in which light is made incident on porous semiconductor layer 11 in a direction perpendicular to porous semiconductor layer 11, or a method in which light is made incident thereon in a horizontal direction.

In a case where porous semiconductor layer 11 is made of a plurality of layers, first, light is made incident thereon in a direction perpendicular to porous semiconductor layer 11 made of a plurality of layers to measure a total haze ratio, and next, the haze ratio may be measured for each layer by eliminating the layers one by one. For example, suppose that porous semiconductor layer 11 is made of three layers as shown in Fig. 2, with the haze ratios thereof being increased successively from the light incident side.

First, the total haze ratio of the three layers of porous semiconductor layers 11a, 11b and 11c is measured. Next, by scraping third porous semiconductor layer 11c off, a first layer (that is, porous semiconductor layer 11a) and a second layer (that is, porous semiconductor layer 11b) are left on electrode 3 made of a conductive supporting member; thus, the total haze ratio of the porous semiconductor layers made of two layers can be measured. At this time, the total haze ratio of the three layers including porous semiconductor layer 11a, porous semiconductor layer 11b and porous semiconductor layer 11c can be regarded as a haze ratio of porous semiconductor layer 11c of the third layer. Moreover, by scraping the second porous semiconductor layer 11b off, the first layer (that is, porous semiconductor layer 11a) is left on the conductive supporting member so that the haze ratio thereof can be measured. At this time, the total haze ratio of the two layers including porous semiconductor layer 11a and porous semiconductor layer 11b can be regarded as a haze ratio of porous semiconductor layer 11b of the second layer. With respect to the method for scraping the porous semiconductor layer off, not particularly limited, various methods may be used, and files, typically exemplified by sand paper, water resistant paper, water file and cloth file, can be used, or a polishing machine and various grinders may be used. In this case, the layer thicknesses of the respective layers are preferably confirmed by using a SEM, an optical microscope, or the like.

The following description will discuss the method for measuring the haze ratio by allowing light to be made incident on the porous semiconductor layer in a direction perpendicular thereto in detail.

By applying incident light to porous semiconductor layer 11 (having three layers in this case) made of a plurality of layers formed on electrode 3 made of a conductive supporting member in a direction perpendicular thereto, the total haze ratio can be measured. In this case, film thicknesses are preferably measured from its cross section by using a SEM.

Next, the layer located farthest from the light incident side, that is, porous semiconductor layer 11c in a case of three layers as shown in Fig. 2 can be scraped off by using a grinding machine. Thereafter, the film thickness is measured from its cross section by using a SEM so that the formation of porous semiconductor layers 11a and 11b can be confirmed.

The haze ratio of the porous semiconductor layer made of the left two porous semiconductor layers 11a, 11b is measured by applying incident light to the porous semiconductor layer in a direction perpendicular thereto. Next, porous semiconductor layer 11b is scraped off by a grinding machine. Thereafter, the film thickness is measured from a cross section by using a SEM so that the formation of porous semiconductor layer 11a can be confirmed. The haze ratio of the left porous semiconductor layer 11a is measured by applying incident light to porous semiconductor layer 11a in a direction perpendicular thereto.

Moreover, in a case of porous semiconductor layer 11 made of a plurality of layers, the haze ratio of each layer may be more accurately evaluated by the following method: Porous semiconductor layer 11 made of a plurality of layers formed on electrode 3 made of a conductive supporting member is cut off in a direction perpendicular to the semiconductor face, that is, in a layer thickness direction, and the haze ratio of each layer may be measured by applying incident light in a horizontal direction. In this case, the thickness of each cut layer piece (that is, in a cross-sectional direction) is determined as the layer thickness of each of the layers that has been preliminarily confirmed by a SEM, an optical microscope or the like.

The following description will discuss the method for measuring the haze ratio by applying light to a porous semiconductor layer in a horizontal direction (that is, in a direction perpendicular to the cross section) so as to be made incident thereon in detail.

Porous semiconductor layer 11, made of a plurality of layers formed on electrode 3 made of a conductive supporting member, is cut in a direction perpendicular to the semiconductor face, by using a micro-cutter into an appropriate size so that measuring samples are prepared. At this time, two cut samples may be placed so that the porous semiconductor layers to be measured are aligned face to face with each other, and bonded to each other by using an epoxy resin or the like so that two samples may be simultaneously prepared. Thereafter, the sample may be formed into a thin film by using a disc grinder, a dimple grinder or the like, or by using a laser scribe device. To each of layers of porous semiconductor layer 11 that have been cut in this manner to be formed into a sample, light is made incident thereon in a direction perpendicular to the cross section so that the haze ratio of each layer can be measured. At this time, light for use in measuring the haze ratio is applied to each of the layers of porous semiconductor layer 11 by using a light condensing device or the like.

A slit having a width that is the same as the layer thickness of a layer to be measured, or narrower than the layer thickness, or a movable slit that can change its slit width, is preferably attached to an integrating sphere tightly made in contact with the sample. With respect to the light source having a light emitting spectrum in the near infrared region, examples thereof include light sources, such as a xenon (Xe) lamp, a mercury xenon lamp and a halogen-tungsten lamp, and a near infrared laser.

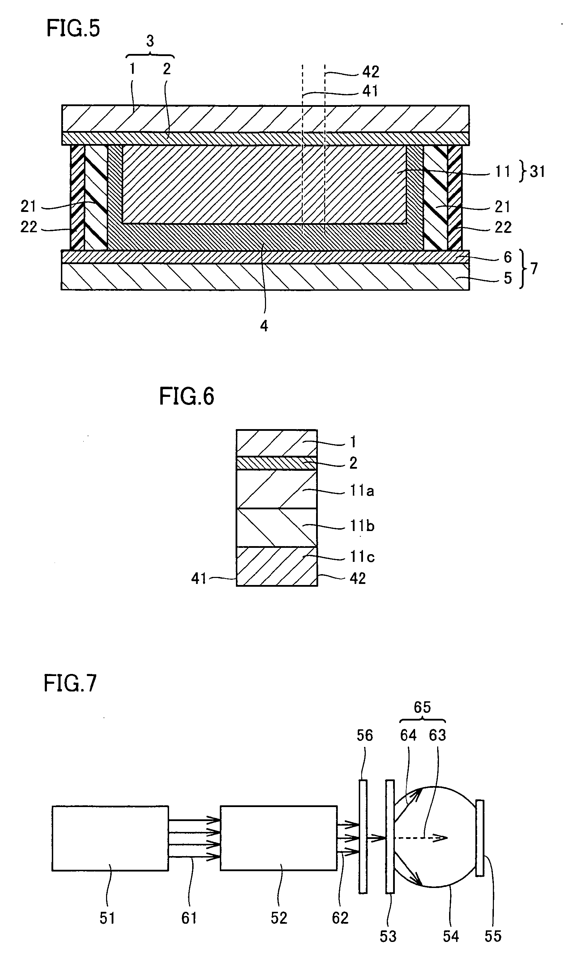

Figs. 5 and 6 are schematic cross-sectional views showing manufacturing processes of a sample to be used for measuring the haze ratio. Fig. 6 shows a structure in which the porous semiconductor layer is made of three layers. By exemplifying the structure in which the porous semiconductor layer is made of three layers, the following description will discuss a specific method for measuring the haze ratio by applying light to the porous semiconductor layer in a horizontal direction to be made incident thereon.

Porous semiconductor layer 11 (in this case, a porous semiconductor layer made of three layers), made of a plurality of layers formed on electrode 3 made of a conductive supporting member, is cut by using a micro-cutter through two cut-off faces (that is, cut-off faces 41, 42) having a predetermined distance as shown in Fig. 5 so that a sample as shown in Fig. 6 is formed. This sample is ground until the distance between the cut-off faces has been set to about 100 µm by using a grinding machine. This is further scraped off by using a grinding machine until the distance between the cut-off faces has become about 10 µm so that a measuring sample 53 is manufactured.

Fig. 7 is a schematic view showing a measuring system used for measuring the haze ratio. In order to measure the haze ratio of each of the layers, for example, a measuring system as shown in Fig. 7 may be used. An integrating sphere with a photomultiplier attached thereto may be used as the detector 54. An incident light ray 62, obtained by subjecting light rays 61 from light source 51 to be spectrally separated by a wavelength selection device 52, may be used as the incident light. The measuring wavelength is defined as a wavelength in the near infrared region, and preferably set to 800 nm.

The incident light may be adjusted on demand by installing a slit 56 in front of wavelength selection device 52. The light that has passed through slit 56 is made incident on measuring sample 53. By installing a reflection plate 55 in the integrating sphere, the total light ray transmittance can be calculated by measuring total transmission light 65 configured by parallel transmission light rays 63 and diffused transmission light rays 64. By removing reflection plate 55 to release parallel transmission light rays 63, the diffusion transmittance can be calculated by measuring only diffused transmission light rays 64.

By position-adjusting the opening section of slit 56 and the position of a desired layer on cut-off face 41 of the sample to be measured so that the total light ray transmittance and the diffusion transmittance of each of the layers of porous semiconductor layers 11a, 11b and 11c can be measured. By using these measuring processes, the haze ratio of each of porous semiconductor layers 11a, 11b and 11c can be found from the horizontal direction to each of the layers. Moreover, this measuring system may be used as a measuring process of the haze ratio in which by applying incident light to porous semiconductor layer 11 made of a plurality of layers in a direction perpendicular thereto, the haze ratio is obtained.

The thickness in the cross-sectional direction of a sample to be used for measuring the haze ratio may be made coincident with the layer thickness of a porous semiconductor layer to be measured (which is preliminarily confirmed by using a SEM or the like).

In contrast, in a case where the layer thickness of the layer to be measured is thin (for example, 5 µm or less) with the result that the sample is hardly made as thin as the layer, a sample may be made to have an appropriate thickness (for example, 10 µm), and the resulting value is layer-thickness-converted, and may be regarded as the haze ratio of the porous semiconductor layer to be measured. One example of the layer-thickness conversion method is given below.

Porous semiconductor layer 11 a is formed on electrode 3 made of a conductive supporting member, and the layer thickness and the total haze ratio of the porous semiconductor layer 11a are measured. Next, porous semiconductor layer 11b is formed on porous semiconductor layer 11a under the same manufacturing conditions (that is, the same kind of a suspension, the same coating conditions and the same firing conditions are used) so that porous semiconductor layer 11b is formed, and the total haze ratio of the two layers of porous semiconductor layer 11a and porous semiconductor layer 11b joined together is measured. Thereafter, by repeating these processes appropriate times in accordance with the number of layers of porous semiconductor layers 11, the haze ratio for each of the layer thicknesses of porous semiconductor layer 11 is obtained under certain manufacturing conditions. By plotting the results of these on a graph, a relational expression between the layer thickness and the haze ratio can be obtained. The layer-thickness conversion can be carried out based upon this relational expression (hereinafter, this method is referred to as "plot method").

In a case where it is difficult to carry out the layer-thickness conversion by using the above-mentioned method, that is, in a case where, even by repeating the processes appropriate times in accordance with the number of layers of porous semiconductor layers, it is difficult to measure the haze ratio for each of the layer thicknesses of porous semiconductor layer 11 under certain manufacturing conditions, to cause a failure to carry out the layer thickness conversion, the layer thickness conversion can be carried out by the following method. With respect to porous semiconductor layer 11 made of a plurality of layers to be measured, several samples (for example, 2 or 3 samples) in which the length between the cut-off faces of each of manufactured measuring samples 53 is changed, are prepared. The length between the cut-off cross sections can be evaluated by film-thickness measurements by using a SEM or the like. While changing the length between the cut-off cross sections, the haze ratio is measured for each of the layers in a horizontal direction with respect to each of the lengths between the cut-off cross sections. By plotting the resulting haze ratios and the lengths between the cut-off cross sections on a graph, a relational expression can be obtained. The layer thickness conversion is executed based upon this relational expression.

Moreover, with respect to the modes of the haze ratio measurements in the present invention, the following methods may be used: a method in which porous semiconductor layer 11 formed on electrode 3 made of a conductive supporting member, as it is, is measured; a method in which porous semiconductor layer 11 separated from electrode 3 made of a conductive supporting member is measured; and a method in which porous semiconductor layer 11 is formed on electrode 3 made of a conductive supporting member and the measuring process is carried out with porous semiconductor layer 11 being sandwiched by another supporting member. From the viewpoint of difficulties in scraping porous semiconductor layer 11 off electrode 3 made of a conductive supporting member and of influences given to the measuring process due to the use of another supporting member, it is preferable to carry out the measuring process, with porous semiconductor layer 11 being formed on electrode 3.

Moreover, in order to correctly measure the haze ratio of porous semiconductor layer 11, the measuring process is preferably carried out after the dye adsorbed to porous semiconductor layer 11 has been eliminated. With respect to the method for eliminating the dye, for example, a method in which the sample (that is, photoelectric conversion layer 31 formed on electrode 3 made of a conductive supporting member) is immersed in an alkali-based aqueous solution and a method in which the aqueous solution is dropped onto the sample may be used. Although not particularly limited, a sodium hydroxide aqueous solution, a potassium hydroxide aqueous solution and the like are preferably used as the alkali-based aqueous solution, and a sodium hydroxide aqueous solution, which is comparatively easily handled, is more preferably used. Although the concentration of the alkali-based aqueous solution is not particularly limited as long as it has a high pH value, it is preferably set in a range from pH10 to 14.

### (Porous Semiconductor Layer)

In the present invention, the method for obtaining a porous semiconductor layer having a predetermined haze ratio in the near infrared region mainly includes: determining a particle size of semiconductor particles that form a compounding material (typically, metal oxide particles); dispersing conditions upon preparing a suspension containing the semiconductor particles; coating conditions, drying conditions and firing conditions (that is, temperature and time) of the suspension; and the kinds (for example, molecular weight) and amounts of additives and a thickener to be added to the suspension.

The particle size of the semiconductor particles can be controlled by changing the temperature and time of an autoclave, for example, in a hydrothermal method. Moreover, semiconductor particles having different particle sizes may be mixed and by changing the mixing ratio, the average particle size may be changed.

With respect to the dispersing conditions upon preparing the suspension containing semiconductor particles, the period of time for application of a ball mill method, a paint shaker method, an ultrasonic method or the like, or the diameter, material and the like of beads for use in dispersion to be used upon preparing the suspension can be listed.

The coating conditions of the suspension include: for example, selection of a coating device used for carrying out, for example, a doctor blade method, a spin coating method and a screen printing method, settings of a coating speed, for example, in the doctor blade method, a rotation speed in the spin coating method, the thickness of a screen and the like in the screen printing, the kinds and amounts of additives and solvents to be contained in the suspension to be used, and characteristics of the suspension, such as the viscosity of the suspension.

The drying conditions of the suspension include a drying temperature and a drying period of time. The firing conditions of the suspension include a firing temperature, a firing period of time, and a kind, a flow rate and the like of an ambient gas in the firing process.

The inventors of the present invention have found that, even when only one of the above-mentioned conditions, such as the particle size of the semiconductor particles in the suspension or the like, is specified, the haze ratio of the porous semiconductor layer after the manufacturing process is not determined univocally and that by systematically specifying various conditions, porous semiconductor layer 11 having a predetermined haze ratio in the near infrared region can be obtained.

With respect to the material for forming the porous semiconductor layer, one kind or two or more kinds of known semiconductors, selected from titanium oxide, zinc oxide, tungsten oxide, barium titanate, strontium titanate and cadmium sulfide, may be used. Among these, titanium oxide or zinc oxide is preferably used as its main component, from the viewpoints of photoelectric conversion efficiency, stability and safety.

With respect to the method for forming porous semiconductor layer 11 on electrode 3 made of a conductive supporting member, various known methods may be used. More specifically, the following methods may be used: a method in which a suspension containing semiconductor particles is applied onto electrode 3 made of a conductive supporting member and this is dried and fired to form porous semiconductor layer 11, a method in which porous semiconductor layer 11 is formed on electrode 3 made of a conductive supporting member by using a CVD method, a MOCVD method or the like using a desired material gas, or a method in which porous semiconductor layer 11 is formed by using a PVD method using a solid material, a vapor deposition method, a sputtering method or a sol-gel method. Although not particularly limited, the layer thickness of each of these porous semiconductor layers 11 is preferably set in a range from 0.5 to 50 µm, from the viewpoints of light transmitting property, photoelectric conversion efficiency and the like.

In a case of forming porous semiconductor layer 11 made of a plurality of layers, when description is given by exemplifying a structure shown in Fig. 2, in order to reduce the costs, among the above-mentioned methods, the following method is preferably used in which a suspension containing semiconductor particles is applied onto electrode 3 made of a conductive supporting member, and after this has been dried and fired to form porous semiconductor layer 11a serving as a first layer, the coating process of a suspension, drying and firing processes thereof are repeated so that porous semiconductor layer 11b and porous semiconductor layer 11c are successively formed after the second layer.

A burning method, a precipitation method, a hydrothermal method and the like may be used as the manufacturing method for semiconductor particles. Among these, the hydrothermal method is preferably used since particles with high purity can be obtained by using a metal alkoxide material with high purity.

The above-mentioned semiconductor particles are dispersed in water or an organic solvent by using a ball mill method, a paint shaker method, an ultrasonic method or the like so that a suspension is prepared.

Examples of the solvent to be used as the suspension include: grime-based solvents, such as ethylene glycol monomethyl ether, alcohol-based solvents, such as ethanol, isopropyl alcohol and terpineol, a mixed solvent, such as isopropyl alcohol/toluene, and water. Prior to the application, these solvents are preferably refined by using a method such as distilling.

With respect to the surfactant to be added so as to improve the stability of the suspension, an organic surfactant that can be discomposed in a firing process upon forming porous semiconductor layer 11 may be used. In this case, such a surfactant containing no metallic ions is preferably used. Examples of the surfactant containing no metallic ions include, for example, a nonionic surfactant and a fatty acid ammonium salt. With respect to the nonionic surfactant, an ether-type surfactant such as alkylphenyl ether, an ester-type surfactant such as polyethylene glycol fatty acid ester, and a nitrogen-containing-type surfactant such as polyoxyethylene alkylamine may be used. Moreover, in order to control the viscosity or the like of the suspension, a polymer, such as polyethylene glycol, polyvinyl alcohol and polyethyl cellulose, may be added thereto. The molecular weight of each of these polymers is preferably set in a range from 10,000 to 300,000.

The suspension thus prepared is applied onto electrode 3 made of a conductive supporting member by using a doctor blade method, a spin coating method, a screen printing method or the like, and this is dried and fired to form porous semiconductor layer 11. Moreover, by repeating the coating, drying and firing processes, porous semiconductor layer 11 made of a plurality of layers can be formed.

Upon drying and firing the coated suspension, the temperature, time, atmosphere and the like can be adjusted on demand, depending on the kinds of semiconductor particles in the suspension and the conductive supporting member. For example, the heating is carried out under the atmosphere or in an inert gas atmosphere, in a range of 50 to 600°C for 10 seconds to 12 hours. These drying and firing processes may be carried out once or two times or more in a single temperature, or may be carried out two or more times, while the temperature is changed.

### (Dye)

With respect to the dye to be used in the present invention, not particularly limited, any dye may be used as long as it has at least an absorbing spectrum in the wavelength range of sun light spectrum (that is, 200 nm to 10 µm) and discharges excited electrons due to light toward porous semiconductor layer 11.

For example, a ruthenium-based metallic complex, such as N719[cis-di(isothiocyanate)-N,N'-bis(2,2'-bipyridyl-4,4'-dicarboxylic acid) ruthenium (II)] and Black Dye[tris(isothiocyanate-ruthenium (II)-2,2':6',2"-terpyridine-4,4,4"-tricarboxylic acid, tris-tetrabutyl ammonium salt], and an organic dye, such as azo-based dyes, quinone-based dyes, quinone-imine-based dyes, quinacridone-based dyes, squarylium-based dyes, cyanine-based dyes, merocyanine-based dyes, triphenylmethane-based dyes, xanthene-based dyes, polyphiline-based dyes, perylene-based dyes, phthalocyanine-based dyes, coumarin-based dyes and indigo-based dyes, are preferably used.

In the present invention, with respect to the method for adsorbing a dye to porous semiconductor layer 11, not particularly limited, various known methods may be used. For example, a method in which the above-mentioned dye is dissolved in an organic solvent to prepare a dye solution, and porous semiconductor layer 11 on a conductive supporting member is immersed in the dye solution, and a method in which the resulting dye solution is applied on the surface of porous semiconductor layer 11 may be used. Prior to the adsorption of the dye, a process for activating the surface of porous semiconductor layer 11, such as a heating treatment, may be carried out, if necessary.

With respect to the solvent to dissolve the dye, any solvent may be used as long as it dissolves the dye, and specific examples thereof include alcohols such as ethanol, ketones such as acetone, ethers such as diethyl ether and tetrahydrofuran, nitride compounds such as acetonitriles, halogenated aliphatic hydrocarbons such as chloroform, aliphatic hydrocarbons such as hexane, aromatic hydrocarbons such as benzene, and esters such as ethyl acetate. These solvents are preferably obtained by being refined through conventionally known methods, and prior to the application of the solvent, a distilling process and/or a drying process may be carried out thereon to further enhance the purity. The concentration of the dye in the dye solution may be adjusted on demand, depending on the dye to be used, the kinds of the solvent and the dye adsorbing process, and for example, it is set, for example, to 1 × 10⁻⁵ mol/l or more, preferably, to 5 × 10⁻⁵ mol/l to 1 × 10⁻² mol/l.

With respect to the adsorbing method of immersing porous semiconductor layer 11 into the dye solution, an appropriate container that can house porous semiconductor layer 11 is filled with the dye solution, and the entire porous semiconductor layer is immersed in the solution, or only a desired portion of the porous semiconductor layer is immersed therein and held for a predetermined period of time. In this case, the conditions may be appropriately adjusted on demand, depending on the dye to be used, the kinds of the solvent, the concentration of the solution and the like. For example, with respect to the ambient atmosphere and the temperature of the solution, room temperature and the atmospheric pressure are preferably used; however, these may be changed on demand. The immersing time is set, for example, in a range from 5 minutes to 100 hours. The immersing process may be carried out once or a plurality of times.

The dye adsorbed onto porous semiconductor layer 11 functions as a photosensitizing agent that absorbs photo-energy to generate excited electrons, and sends the excited electrons to porous semiconductor layer 11. That is, the dye is adsorbed onto porous semiconductor layer 11 so that photoelectric conversion layer 31 is formed.

### (Carrier Transporting Layer)

A carrier transporting layer is formed of a material that can transport electrons, holes or ions, for example, a conductive material. Specific examples include: hole transporting materials, such as polyvinyl carbazole and triphenyl amine; electron transporting materials, such as tetranitro fluorenone; conductive polymers, such as polythiophene and polypyrrole; ion conductors, such as liquid electrolyte and polymer electrolyte; inorganic P-type semiconductors, such as copper iodide and copper thiocyanate.

Among the above-mentioned materials, ion conductors are preferably used, and liquid electrolyte containing redox electrolyte is more preferably used. With respect to the redox electrolyte, not particularly limited, any redox electrolyte may be used as long as it is generally used for a battery, a solar cell and the like. Specific examples thereof include those materials containing a redox combination of I/I₃⁻ type, Br₂⁻/Br₃⁻ type, Fe²⁺/Fe³⁺type, or quinone/hydroquinone type. For example, a combination between a metallic iodide, such as lithium iodide (Lil), sodium iodide (NaI), potassium iodide (KI) and calcium iodide (CaI₂), and iodine (I₂), a combination between a tetraalkyl ammonium salt, such as tetraethyl ammonium iodide (TEAI), tetrapropyl ammonium iodide (TPAI), tetrabutyl ammonium iodide (TBAI), tetrahexyl ammonium iodide (THAI), and iodine, and a combination between a metallic bromide, such as lithium bromide (LiBr), sodium bromide (NaBr), potassium bromide (KBr) and calcium bromide (CaBr₂) and bromine, are preferably used, and among these, a combination between LiI and I₂ is in particular preferable.

Moreover, in the carrier transporting layer, with respect to the liquid electrolyte solvent, examples thereof include carbonate compounds such as propylene carbonate, nitrile compounds such as acetonitrile, alcohols such as ethanol, in addition to water and non-protic polar substances; and among these, a carbonate compound and a nitrile compound are in particular preferably used. Moreover, two or more kinds of these solvents may be used as a mixture.

With respect to the additives to the liquid electrolyte, conventionally used nitrogen-containing aromatic compounds such as t-butyl pyridine (TBP), or imidazole salts, such as dimethylpropyl imidazole iodide (DMPII), methylpropyl imidazole iodide (MPII), ethylmethyl imidazole iodide (EMII), ethyl imidazole iodide (EII), hexylmethyl imidazole iodide (HMII), may be used.

Moreover, the electrolyte concentration in the liquid electrolyte is preferably set in a range from 0.01 to 1.5 mol/l, more preferably, from 0.1 to 0.7 mol/l.

Next, a solid-state substance that allows a redox combination to be dissolved therein or can be combined with at least one substance forming a redox combination may be used as the polymer electrolyte. Specific examples thereof include: polymer compounds, such as polyethylene oxide, polypropylene oxide, polyethylene succinate, poly-β-propiolactone, polyethylene imine and polyalkylene sulfide, or crosslinked compounds thereof, and compounds formed by adding a polyether segment or an oligoalkylene oxide structure as a side chain to a polymer functional group, such as polyphosphazene, polysiloxane, polyvinyl alcohol, polyacrylic acid and polyalkylene oxide, or copolymers thereof, and among these, in particular, those compounds having an oligoalkylene oxide structure as a side chain or those compounds having a polyether segment as a side chain are preferably used.

In order to allow a solid-state substance to contain a redox combination, for example, a method in which a monomer serving as a material for a polymer compound is polymerized in the co-existence with a redox combination, and a method in which a solid-state substance such as polymer compound is dissolved in a solvent on demand, and to this then added the above-mentioned redox combination, may be used. The content of the redox combination may be properly selected in accordance with an ionic conductive function required.

### (Spacer)

In order to prevent photoelectric conversion layer 31 from coming into contact with an electrode 7 made of an opposing-electrode-side supporting member, a spacer 21 may be used on demand. In general, a polymer film such as polyethylene is used as spacer 21. The film thickness of the polymer film is preferably set in a range from 10 to 50 µm.

### (Sealing Member)

The photovoltaic cell of the present invention may be further provided with a sealing member. Any member may be used as sealing member 22 as long as it can seal the photovoltaic cell so as to prevent carrier transporting layer 4 from leaking. Specific materials for the sealing member include epoxy resin, silicone resin and the like. Spacer 21 may also be used as sealing member 22 in a combined manner. However, in a case where upon application of a solid-state material as carrier transporting layer 4, there is no possibility of flow-out of carrier transporting layer 4, sealing member 22 is not necessarily required.

### (Opposing Electrode-Side Supporting Member)

Electrode 7, which is formed as an opposing electrode-side supporting member, forms a pair of electrodes together with electrode 3 made of a conductive supporting member on which photoelectric conversion layer 31 is formed. With respect to electrode 7, those having a structure in which conductive layer 6 is formed on substrate 5 have been widely used. This conductive layer 6 may be transparent or opaque. A film, made from metal such as gold, platinum, silver, copper, aluminum, titanium, tantalum and tungsten, or a transparent conductive material such as ITO, SnO₂ and ZnO, may be used as conductive layer 6. Conductive layer 6 can be formed by using a known method, and its film thickness is properly set in a range from 0.1 to 5 µm. In order to accelerate the charge transfer in relation to carrier transporting layer 4, a catalyst film such as platinum is preferably formed on the surface of conductive layer 6. In this case, the film thickness of the catalyst film may be set in a range from 1 to 1000 nm. Moreover, this catalyst film may be combinedly used as conductive layer 6.

A photovoltaic cell is prepared by the above-mentioned arrangements. Moreover, the photovoltaic cell is connected to an external circuit to be formed into a structure capable of supplying power externally so that a dye-sensitized solar cell using the photovoltaic cell of the present invention is provided.

### EXAMPLES

The following description will discuss the present invention in detail by means of Examples and Comparative Examples. However, the following description is exemplary only, and various modifications may be made therein; therefore, the present invention is not intended to be limited by these Examples.

In this Example, first, by using a suspension of titanium oxide particles having the same particle size and the same concentration, porous semiconductor layers 11 having different haze ratios were formed by changing the dispersing time and firing conditions in the preparation process of the suspension, as single layers respectively.

The titanium oxide particle suspension was prepared by adding titanium oxide particles (trade name: AMT-600, particle size: about 30 nm, made by Teika Co., Ltd.) to terpineol, and to 40 ml of this suspension were loaded 100g of zirconia beads (diameter: 2 mm), and these were dispersed by a paint shaker. The dispersing periods of time by the paint shaker were set to 30 minutes, 2 hours, 4 hours, 6 hours and 24 hours. The solutions that had been subjected to these dispersing processes were filtered so that the zirconia beads were removed, and after the filtered solution had been condensed by an evaporator until the concentration of titanium oxide had become 15wt%, to this was added two times as much ethanol as this solution, and the resulting solution was centrifuged at 5000 rpm. After the titanium oxide particles produced by this process had been washed by ethanol, a solution, prepared by dissolving ethyl cellulose and terpineol in absolute ethanol, was added to the resulting particles, and this was stirred so that the titanium oxide particles were dispersed in the solution. The ethanol in the solution was evaporated under a reduced pressure of 40 mbar at 50°C so that a suspension was prepared. By adjusting the concentrations, the final composition of the suspension was set to 10wt% in titanium oxide concentration, 10wt% in ethyl cellulose concentration and 64wt% in terpineol concentration.

The suspension dispersed for 30 minutes is referred to as suspension A, the suspension dispersed for two hours is referred to as suspension B, the suspension dispersed for four hours is referred to as suspension C, the suspension dispersed for 6 hours is referred to as suspension D, and the suspension dispersed for 24 hours is referred to as suspension E. Each of these suspensions A to E was applied onto electrode 3 made of a conductive supporting member, and fired so that porous semiconductor layer 11 having a single layer with a layer thickness of 5 µm was formed.

A glass plate (made by NSG) with a SnO₂ film serving as a transparent conductive film formed thereon was used as the conductive supporting member. The sheet resistance value thereof was 10 Ω/□.

A screen printing method was used as the coating method, and as shown in [1] to [9] of Table 1, the total 9 ways of modified firing conditions including three ways of gas conditions used in a firing furnace (oxygen 5 ml/min, nitrogen 5 ml/min, mixed gas of oxygen 1 ml/min and nitrogen 4 ml/min) and three ways of firing temperatures (450°C, 480°C, 500°C) were used. The firing time was 1 hour in all the cases.

**[Table 1]**

| Firing condition (Gas/Temperature) | 450°C | 480°C | 500°C |
|---|---|---|---|
| (Oxygen) 5 ml/min | [1] | [2] | [3] |
| (Oxygen)/(Nitrogen) (1 ml/min)/(4 ml/min) | [4] | [5] | [6] |
| (Nitrogen) 5 ml/min | [7] | [8] | [9] |

### <Evaluation of Haze Ratio in Layer Thickness Conversion>

By using the above-mentioned five kinds of suspensions A to E, 45 kinds of porous semiconductor layers 11 were obtained through the above-mentioned 9 ways of firing conditions ([1] to [9]), and the haze ratio in the wavelength of 800 nm of each of these was measured by using a method in which light was made incident on each layer in a horizontal direction. In the measuring process of the haze ratio, an integrating sphere (GPS series with 4 ports, made by Labsphere Co., Ltd.) placed in a dark box was used as a detector, and the measuring wavelength was prepared by allowing light from an Xe lamp (L2195, made by Hamamatsu Photonics K. K.) to be spectrally separated by a spectroscope (M50 Model, made by Spectroscope Co., Ltd.) to 800 nm.

Each of the measuring samples for the haze ratio was prepared by cutting each of porous semiconductor layers 11 of the 45 kinds along a face perpendicular to each semiconductor so as to have a thickness of 10 µm. For the cutting process of the conductive supporting member and the porous semiconductor layer 11, a micro-cutter (MC-201, made by MARUTO INSTRUMENT Co., Ltd.) was used, and the cut pieces with a predetermined width were ground to a thickness of 10 µm by using a rotary polishing machine (Dialap, made by MARUTO INSTRUMENT Co., Ltd.) and a dimple grinder (Mode1656: made by Gatan Co., Ltd.).

Since the thickness of the measuring sample was 10 µm, the measured value was converted in its layer thickness to 5 µm that was the same as the layer thickness of the porous semiconductor layer, and defined as the haze ratio of porous semiconductor layer 11. The layer-thickness conversion was carried out by using the aforementioned plotting method. In the present Example, porous semiconductor layers 11 in which the haze ratio was varied in a range from 3 to 82% were formed. Table 2 shows the results of layer-thickness conversion, and Table 3 shows the results of the haze ratio of the measured samples with a length between cut-off cross sections being set to 10 µm.

The following description will discuss the present invention in detail, by exemplifying porous semiconductor layer 11 made from suspension A by using firing conditions [1]. Porous semiconductor layer 11a was formed from suspension A through a screen printing method by using firing conditions [1]. The film thickness of porous semiconductor layer 11a was 5 µm. Successively, on porous semiconductor layer 11a, porous semiconductor layer 11b was formed from suspension A through a screen printing method by using firing conditions [1]. The layer thickness of porous semiconductor layer 11 (that is, the sum of the layer thicknesses of porous semiconductor layer 11a and porous semiconductor layer 11b) was 10 µm. The haze ratio at this time was measured by applying an incident light to the porous semiconductor layer in a direction perpendicular thereto, and the resulting value was 82%.

Successively, on porous semiconductor layer 11b, porous semiconductor layer 11c was formed from suspension A through a screen printing method by using firing conditions [1]. The layer thickness of porous semiconductor layer 11 (that is, the sum of the layer thicknesses of porous semiconductor layer 11a, porous semiconductor layer 11b and porous semiconductor layer 11c) was 15 µm. The haze ratio at this time was measured by applying an incident light to the porous semiconductor layer in a direction perpendicular thereto, and the resulting value was 83%.

In a case where the layer thickness (µm) of the porous semiconductor layer was plotted on the axis of abscissas X, while the haze ratio (%) was plotted on the axis of ordinates Y, an approximate expression, Y = (1/5)X + 80, was obtained by a least square approximation, and based upon this expression, the total haze ratio was found to be 81 % when porous semiconductor layer 11a was formed with a layer thickness of 5 µm by using suspension A and firing conditions [1]. Actually, after porous semiconductor layer 11a had been formed, when the haze ratio was measured by applying an incident light to the porous semiconductor layer in a direction perpendicular thereto, the resulting haze ratio was 81%.

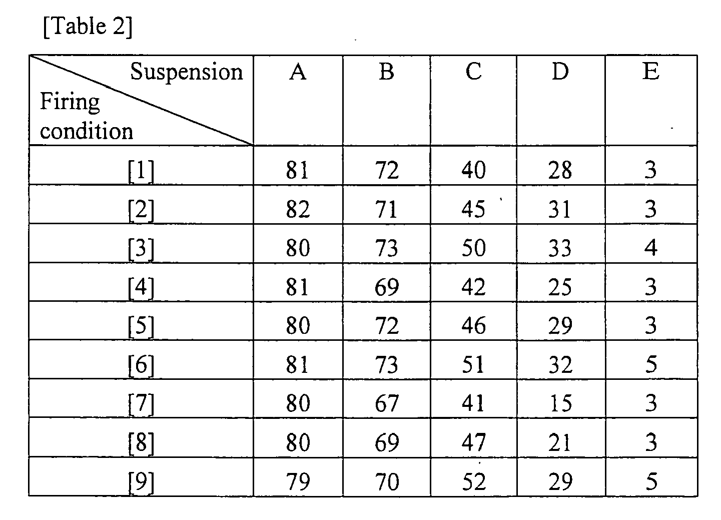

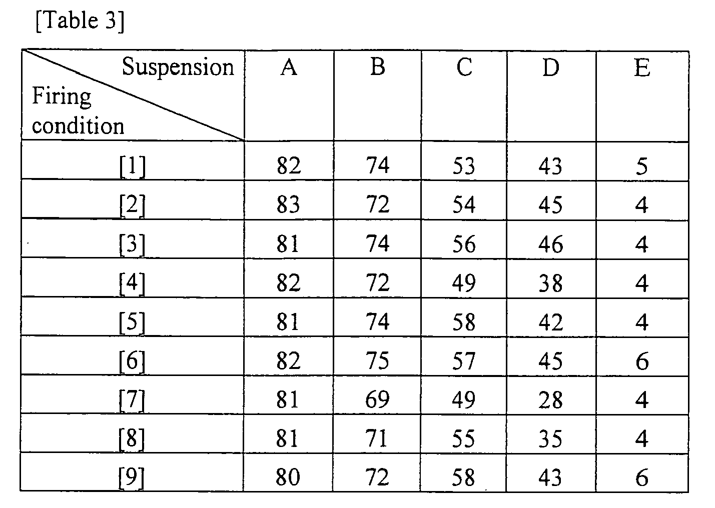

With respect to porous semiconductor layers 11 manufactured in respective Examples and Comparative Examples to be described below, Table 4 shows the layer-thickness converted haze ratio calculated by using the above-mentioned method.

**[Table 4]**

| | Total haze ratio of porous semiconductor layer 11 | Haze ratio of porous semiconductor layer 11a | Haze ratio of porous semiconductor layer 11b | Haze ratio of porous semiconductor layer 11c | Haze ratio of porous semiconductor layer 11d | Haze ratio of porous semiconductor layer 11e | Conversion efficiency (%) |
|---|---|---|---|---|---|---|---|
| Example 1 | 81 | 4 | 81 | - | - | - | 8.0 |
| Example 2 | 72 | 3 | 71 | - | - | - | 8.2 |
| Example 3 | 83 | 7 | 83 | - | - | - | 8.7 |
| Example 4 | 85 | 7 | 85 | - | - | - | 8.8 |
| Example 5 | 81 | 4 | 42 | 81 | - | - | 9.3 |
| Example 6 | 81 | 3 | 5 | 81 | - | - | 8.0 |
| Example 7 | 81 | 3 | 29 | 80 | - | - | 9.0 |
| Example 8 | 81 | 4 | 72 | 81 | - | - | 8.3 |
| Example 9 | 81 | 4 | 81 | 81 | - | - | 8.0 |
| Example 10 | 70 | 3 | 29 | 70 | - | - | 8.8 |
| Example 11 | 81 | 29 | 42 | 81 | - | - | 7.9 |
| Example 12 | 81 | 3 | 50 | 81 | - | - | 9.6 |
| Example 13 | 81 | 3 | 51 | 81 | - | - | 9.2 |
| Example 14 | 81 | 3 | 40 | 68 | 81 | - | 9.5 |
| Example 15 | 78 | 10 | 45 | 78 | - | - | 9.1 |
| Example 16 | 83 | 7 | 61 | 83 | - | - | 9.4 |
| Example 17 | 85 | 7 | 65 | 85 | - | - | 9.6 |
| Example 18 | 86 | 7 | 64 | 84 | - | - | 9.3 |
| Example 19 | 72 | 72 | - | - | - | - | 8.1 |
| Example 20 | 83 | 3 | 62 | 66 | 84 | - | 9.8 |
| Example 21 | 87 | 3 | 62 | 66 | 85 | - | 9.7 |
| Example 22 | 84 | 3 | 50 | 62 | 66 | 84 | 9.8 |
| Example 23 | 67 | 3 | 42 | 62 | 66 | - | 9.0 |
| Example 24 | 85 | 3 | 4 | 62 | 84 | | 9.8 |
| Comparative Example 1 | 52 | 3 | 50 | - | - | - | 7.2 |
| Comparative Example 2 | 48 | 4 | 29 | 39 | - | - | 7.7 |
| Comparative Example 3 | 55 | 3 | 29 | 51 | - | - | 7.8 |
| Comparative Example 4 | 57 | 3 | 28 | 42 | 50 | - | 7.8 |

Moreover, with respect to porous semiconductor layers 11 formed in respective Examples and Comparative Examples described below, the haze ratio was measured separately by using a method in which light was made incident on porous semiconductor layer 11 in a horizontal direction as well as by using a method in which light was made incident on porous semiconductor layer 11 in a perpendicular direction, through the following sequence of processes.

### <Measuring Method of Haze Ratio>

### (Measurements by a method in which light is made incident on a porous semiconductor layer in a horizontal direction)

First, the following description will discuss a structure in which porous semiconductor layer 11 is made of three porous semiconductor layers 11a, 11b and 11c.

A porous semiconductor layer 11 (made of three layers in this case) formed on electrode 3 made of a conductive supporting member was cut by using a micro-cutter (MC-201, made by MARUTO INSTRUMENT Co., Ltd.) through two cut-off faces (that is, cut-off faces 41, 42) having a distance of 300 µm in a direction perpendicular to the semiconductor face, as shown in Fig. 5 so that a sample as shown in Fig. 6 was formed. The cut-off faces of this sample were ground by using a disc grinder (model623: made by Gatan Co., Ltd.) until the length between the cut-off faces had been set to about 100 µm. The cut-off face 41 was further ground by using a dimple grinder (mode1656: made by Gatan Co., Ltd.) until the length between the cut-off faces had become 10 µm so that a measuring sample 53 was prepared.

By using a measuring system as shown in Fig. 7, light rays are made incident on the semiconductor layer in a horizontal direction (that is, in a direction perpendicular to the cut-off face) so that the haze ratio of each of the layers was measured. An integrating sphere (GPS series with 4 ports, made by Labsphere Co., Ltd.) with a photomultiplier (R928, made by Hamamatsu Photonics K. K. attached thereto was used as detector 54. The measuring wavelength was prepared by allowing light from a light source 51 (Xe lamp L2195, made by Hamamatsu Photonics K. K.) to be spectrally separated by wavelength selection device 52 (spectroscope (M50 Model, made by Spectroscope Co., Ltd.) to 800 nm. A slit 56 (M-FS30-R, made by Newport Co., Ltd.) was attached thereto.

Light whose irradiation area was narrowed to a width of 3 µm by slit 56 was made incident on measuring sample 53. The total light ray transmittance was measured by an integrating sphere in which a reflection plate 55 (Spectralon standard reflection, made by Labsphere Co., Ltd.) was installed. Upon obtaining the diffusion transmittance, by removing reflection plate 55 to release parallel transmission light rays 63, only diffused transmission light rays 64 were measured. By position-adjusting the opening section of slit 56 and the position of a desired layer on cut-off face 41 of measuring sample 53, the haze ratio of each of porous semiconductor layers 11a, 11b and 11c was found. Table 5 shows the results.

### (Measurements by a method in which light is made incident on a porous semiconductor layer in a direction perpendicular thereto)

With respect to Examples 7, 12, 14, 17 and 22 to be described below, the haze ratio was measured by applying an incident light in a direction perpendicular to each of the porous semiconductor layers, by using the following method.

First, the following description will discuss a structure in which porous semiconductor layer 11 is made of three porous semiconductor layers 11a, 11b and 11c.

The total haze ratio was measured on porous semiconductor layer 11 made of a plurality of layers formed on electrode 3 made of a conductive supporting member, by applying an incident light in a direction perpendicular to porous semiconductor layer 11. Moreover, the film thickness was measured from the cross section by using a SEM.

Next, the layer located farthest from the light incident side, that is, porous semiconductor layer 11c was ground by using a grinding machine (34305, made by SCANDIA Co., Ltd.). Then, the film thickness was measured from the cross section by using a SEM so that the formation of porous semiconductor layers 11a and 11b was confirmed.

The haze ratio of the porous semiconductor layer made of the left two layers of porous semiconductor layers 11a and 11b was measured by applying incident light to the porous semiconductor layer in a direction perpendicular thereto. Next, porous semiconductor layer 11b was scraped off by a grinding machine. Thereafter, the film thickness was measured from a cross section by using a SEM so that the formation of porous semiconductor layer 11a was confirmed. The haze ratio of the left porous semiconductor layer 11a was measured by applying incident light to porous semiconductor layer 11a in a direction perpendicular thereto.

With respect to structures in which porous semiconductor layer 11 was made of four layers and five layers, the grinding process and measuring process for the haze ratio were repeated successively from the layer located farthest from the incident side by using the same methods as described above, the haze ratios of the respective layers were measured. Table 6 shows the results.

### (Example 1)

A porous semiconductor layer 11 with a two-layer structure including porous semiconductor layers 11a and 11b from the conductive supporting member side was prepared. That is, in Example 1, in place of porous semiconductor layers 11a, 11b, 11c as shown in Fig. 2, the porous semiconductor layer made of porous semiconductor layers 11a and 11b was formed.

First, suspension E (solution dispersed for 24 hours) was applied onto a conductive supporting member made of a glass plate made by NSG that was the same as described earlier by using a screen printing method, and this was fired for one hour under firing conditions [1] (heated at 450°C, under an oxygen flow of 5 ml/min) so that porous semiconductor layer 11a was formed, and suspension A (solution dispersed for 30 minutes) was applied thereto by using a screen printing method, and this was fired for one hour under firing conditions [1] for one hour so that porous semiconductor layer 11b was formed.

The layer thickness of each of porous semiconductor layers 11a and 11b was 5 µm, that is, 10 µm in the total of two layers, and when measured as a single layer, the haze ratios at 800 nm of porous semiconductor layers 11a, 11b were respectively 3% and 81 %. By using porous semiconductor layer 11 made of these layers, a dye-sensitized solar cell was produced by using the following method.

First, by using the aforementioned dye, Black Dye, this dye was dissolved in a 1:1 mixed solvent of acetonitrile and t-butanol, and to this was added 20 mM of dioxycol acid (made by Tokyo Kasei Co., Ltd.) to prepare a dye solution for use in adsorption.

The conductive supporting member with porous semiconductor layer 11 formed thereon was immersed in this solution for 24 hours so that a photoelectric conversion layer 31 was formed.

As an opposing electrode side supporting member formed as electrode 7, a member, prepared by vapor depositing a platinum film of 300 nm on substrate 5 made of a glass plate having the same structure as that of the conductive supporting member as conductive layer 6, was used.

This opposing electrode side supporting member and the conductive supporting member with photoelectric conversion layer 31 formed thereon were superposed on each other with HIMILAN (made by DuPont Co., Ltd.) having a thickness of 50 µm being interposed therebetween as a spacer 21, and an electrolytic solution was injected into the gap as a carrier transporting layer 4, and the side faces thereof were sealed by sealing member 22 so that a photovoltaic cell was obtained. The electrolytic solution was prepared by dissolving LiI (0.1 M, made by Aldrich), I₂ (0.05 M, made by Aldrich), t-butyl pyridine (0.5 M, made by Aldrich) and dimethylpropyl imidazolium iodide (0.6 M, made by Shikoku Kasei Co) in acetonitrile (made by Aldrich).

By using the photovoltaic cell manufactured by the above-mentioned method, a dye-sensitized solar cell of the present invention was obtained. The photoelectric conversion efficiency of the dye-sensitized solar cell was found by applying light (AM1.5 solar simulator) having an intensity of 100 mW/cm² thereto and then evaluating the cell by a digital source meter; thus, a value of 8.0% was obtained.

Next, in order to confirm the haze ratio, this dye-sensitized solar cell was decomposed, and photoelectric conversion layer 31 was washed with acetonitrile, and then washed with a 0.01 M sodium hydroxide aqueous solution so that the dye was removed.

First, the total haze ratio of porous semiconductor layer 11 was measured by applying light of 800 nm to be made incident on the semiconductor layer in a direction perpendicular thereto. The total haze ratio of porous semiconductor layer 11 was 81%.

Next, by using the same processing method as that described in the beginning portion of the aforementioned embodiment, porous semiconductor layer 11 was cut and ground to prepare a sample having a thickness of 10 µm.

The layer-thickness converted haze ratios at 800 nm of respective porous semiconductor layers 11a and 11b were 4% and 81%, respectively.

### (Example 2)

Suspension E (solution dispersed for 24 hours) was used for porous semiconductor layer 11a, while suspension B (solution dispersed for 2 hours) was used for porous semiconductor layer 11b, and these were respectively fired under firing conditions [3] (heated at 500°C, under an oxygen flow of 5 ml/min) so that porous semiconductor layer 11 was formed.

The layer thickness of each of porous semiconductor layers 11a and 11b was 5 µm, that is, 10 µm in the total of two layers, and when measured as a single layer, the haze ratios at 800 nm of porous semiconductor layers 11a, 11b were respectively 4% and 73%.

A dye-sensitized solar cell was manufactured by using the same method as that of Example 1 except for the above-mentioned conditions, and its photoelectric conversion efficiency was 8.2%.

Moreover, the total haze ratio at 800 nm of porous semiconductor layer 11 was measured in the same manner as in Example 1, and the value of 72% was obtained.

Furthermore, when the haze ratios at 800 nm of respective porous semiconductor layers 11a, 11b were measured in the same manner as in Example 1, the layer-thickness converted haze ratios were 3% and 71% respectively.

### (Comparative Example 1)

Suspension E (solution dispersed for 24 hours) was used for porous semiconductor layer 11a, while suspension C (solution dispersed for 4 hours) was used for porous semiconductor layer 11b, and these were respectively fired under firing conditions [3] (heated at 500°C, under an oxygen flow of 5 ml/min) so that porous semiconductor layer 11 was formed.

The layer thickness of each of porous semiconductor layers 11a and 11b was 5 µm, that is, 10 µm in the total of two layers, and when measured as a single layer, the haze ratios at 800 nm of porous semiconductor layers 11a, 11b were respectively 4% and 50%.

A dye-sensitized solar cell was manufactured by using the same method as that of Example 1 except for the above-mentioned conditions, and its photoelectric conversion efficiency was 7.2%.

Moreover, the total haze ratio at 800 nm of porous semiconductor layer 11 was measured in the same manner as in Example 1, and the value of 52% was obtained.

Furthermore, when the haze ratios at 800 nm of respective porous semiconductor layers 11a, 11b were measured in the same manner as in Example 1, the layer-thickness converted haze ratios were 3% and 50% respectively.

### (Example 3)

Titanium isopropoxide (purity: 99%, made by Kishida Kagaku Co., Ltd.) (125 ml) was dropped into a 0.1 M nitric acid aqueous solution (750 ml) (made by Kishida Chemical Co., Ltd.) to be hydrolyzed, and this was successively heated at 80°C for eight hours to prepare a sol solution. Thereafter, this was then subjected to a particle growth at 250°C for 10 hours in an autoclave made of titanium. This was further subjected to an ultrasonic dispersing process for 30 minutes so that a colloidal solution (colloidal solution A) containing titanium oxide particles having an average primary particle size of 15 nm was prepared.

Colloidal solution A, thus prepared, was condensed by an evaporator to a concentration of 15wt% of titanium oxide so that a colloidal solution B was prepared, and to this was added ethanol of twice as much amount as colloidal solution B, and this was then subjected to a centrifugal separation at 5000 rpm. After titanium oxide particles obtained through this process had been washed with ethanol, a solution prepared by dissolving ethylcellulose and terpineol in absolute ethanol was added thereto, and this was stirred so that the titanium oxide particles were dispersed in the solution. Ethanol was evaporated at 50°C under a reduced pressure of 40 mbar so that a suspension was prepared.

Concentration adjustments were carried out to prepare a final composition having 10wt% in titanium oxide concentration, 10wt% in ethylcellulose concentration and 64wt% in terpineol concentration so that a suspension F was prepared.

Next, titanium oxide particles (trade name: JA-1, anatase-type; average primary particle size 180 nm, made by Teika Co., Ltd.) were added to terpineol, and to this was further added 100 g of zirconia beads (2 mm in diameter), and this was subjected to a dispersing process in a paint shaker for 4 hours. The dispersed solution was filtered to remove the zirconia beads, and the filtered solution was condensed by an evaporator to 15wt% in a concentration of titanium oxide so that a colloidal solution C was obtained.

Moreover, the above-mentioned colloidal solution C (80wt%) was added to titanium oxide of colloidal solution B, and to this further added ethanol twice as much as the colloidal solution, and the resulting solution was subjected to a centrifugal separation at 5000 rpm. After the titanium oxide particles produced by this process had been washed by ethanol, a solution, prepared by dissolving ethyl cellulose and terpineol in absolute ethanol, was added to the resulting particles, and this was stirred so that the titanium oxide particles were dispersed in the solution. The ethanol in the solution was evaporated under a reduced pressure of 40 mbar at 50°C so that a suspension was prepared.

Concentration adjustments were carried out to prepare a final composition having 12wt% in titanium oxide concentration, 10wt% in ethylcellulose concentration and 62wt% in terpineol concentration so that a suspension G was prepared.

Suspension F was used for porous semiconductor layer 11a, while suspension G was used for porous semiconductor layer 11b, and these were respectively fired under firing conditions [3] (heated at 500°C, under an oxygen flow of 5 ml/min) so that porous semiconductor layer 11 was formed. The layer thickness of each of porous semiconductor layers 11a and 11b was 5 µm, that is, 10 µm in the total of two layers.

A dye-sensitized solar cell was manufactured by using the same method as that of Example 1 except for the above-mentioned conditions, and its photoelectric conversion efficiency was 8.7%.

Moreover, the total haze ratio at 800 nm of porous semiconductor layer 11 was measured in the same manner as in Example 1, and the value of 83% was obtained.

Furthermore, when the haze ratios at 800 nm of respective porous semiconductor layers 11a, 11b were measured in the same manner as in Example 1, the layer-thickness converted haze ratios were 7% and 83% respectively.

### (Example 4)

The same preparation method as that of suspension G was carried out except that titanium oxide particles having an average primary particle size of 350 nm (made by Nano-Clean Science Co., Ltd.) were used in place of the titanium oxide particles in the preparation method of suspension G of Example 3; thus, suspension H was obtained.

Suspension F was used for porous semiconductor layer 11a, while suspension H was used for porous semiconductor layer 11b, and these were respectively fired under firing conditions [3] (heated at 500°C, under an oxygen flow of 5 ml/min) so that porous semiconductor layer 11 was formed. The layer thickness of each of porous semiconductor layers 11a and 11b was 5 µm, that is, 10 µm in the total of two layers.

A dye-sensitized solar cell was manufactured by using the same method as that of Example 1 except for the above-mentioned conditions, and its photoelectric conversion efficiency was 8.8%.

Moreover, the total haze ratio at 800 nm of porous semiconductor layer 11 was measured in the same manner as in Example 1, and the value of 85% was obtained.

Furthermore, when the haze ratios at 800 nm of respective porous semiconductor layers 11a, 11b were measured in the same manner as in Example 1, the layer-thickness converted haze ratios were 7% and 85% respectively.

Moreover, the decomposition of the dye-sensitized solar cell and the washing process of the photoelectric conversion layer 31 were carried out in the same manner as in Example 1, and porous semiconductor layer 11b was scraped off by using a grinding machine, and when the haze ratio of the left porous semiconductor layer 11a at 800 nm was measured, the resulting value was 7%. Thus, the total haze ratio of porous semiconductor layer 11 of the two layers was regarded as the haze ratio of the second porous semiconductor layer 11b. That is, the haze ratios of porous semiconductor layers 11a, 11b can also be measured by using this measuring method.

### (Example 5)

Porous semiconductor layer 11 was formed into a three-layer structure as shown in Fig. 2, and the three layers were defined as porous semiconductor layers 11a, 11b and 11c from the conductive supporting member side.

Suspension E (solution dispersed for 24 hours) was applied onto a conductive supporting member made of a glass plate made by NSG that was the same as described earlier by using a screen printing method, and this was fired for one hour under firing conditions [1] (heated at 450°C, under an oxygen flow of 5 ml/min) so that porous semiconductor layer 11a was formed, and suspension C (solution dispersed for four hours) was applied thereto by using a screen printing method, and this was fired for one hour under firing conditions [1] for one hour so that porous semiconductor layer 11b was formed, and to this was further applied suspension A (solution dispersed for 30 minutes) by a screen printing method, and this was fired for one hour under firing conditions [1] so that porous semiconductor layer 11c was formed thereon.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 40% and 81 %.

A dye-sensitized solar cell was manufactured by using the same method as that of Example 1 except for the above-mentioned conditions, and its photoelectric conversion efficiency was 9.3%.

Moreover, the total haze ratio at 800 nm of porous semiconductor layer 11 was measured in the same manner as in Example 1, and the value of 81 % was obtained.

Furthermore, when the haze ratios at 800 nm of respective porous semiconductor layers 11a, 11b and 11c were measured in the same manner as in Example 1, the layer-thickness converted haze ratios were 4%, 42% and 81% respectively.

### (Example 6)

Suspension E (solution dispersed for 24 hours) was used for porous semiconductors layer 11a and 11b, while suspension A (solution dispersed for 30 minutes) was used for porous semiconductor layer 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 3% and 81%.

A dye-sensitized solar cell was manufactured by using the same method as that of Example 1 except for the above-mentioned conditions, and its photoelectric conversion efficiency was 8.0%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 3%, 5% and 81% respectively.

### (Example 7)

Suspension E (solution dispersed for 24 hours) was used for porous semiconductor layer 11a, and suspension D (solution dispersed for 6 hours) was used for porous semiconductor layer 11b, while suspension A (solution dispersed for 30 minutes) was used for porous semiconductor layer 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 28% and 81 %.

A dye-sensitized solar cell was manufactured by using the same method as that of Example 1, and its photoelectric conversion efficiency was 9.0%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 3%, 29% and 80% respectively.

### (Example 8)

Suspension E (solution dispersed for 24 hours) was used for porous semiconductor layer 11a and suspension B (solution dispersed for 2 hours) was used for porous semiconductor layer 11b, while suspension A (solution dispersed for 30 minutes) was used for porous semiconductor layer 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 72% and 81%.

A dye-sensitized solar cell was manufactured by using the same method as that of Example 1, and its photoelectric conversion efficiency was 8.3%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 4%, 72% and 81% respectively.

### (Example 9)

Suspension E (solution dispersed for 24 hours) was used for porous semiconductor layer 11a while suspension A (solution dispersed for 30 minutes) was used for porous semiconductor layers 11b and 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 81% and 81%.

A dye-sensitized solar cell was manufactured by using the same method as that of Example 1, and its photoelectric conversion efficiency was 8.0%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 4%, 81% and 81% respectively.

### (Example 10)

Suspension E (solution dispersed for 24 hours) was used for porous semiconductor layer 11a and suspension D (solution dispersed for 6 hours) was used for porous semiconductor layer 11b, while suspension B (solution dispersed for 2 hours) was used for porous semiconductor layer 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11 a, 11b and 11c were respectively 3%, 28% and 72%.

A dye-sensitized solar cell was manufactured by using the same method as that of Example 1, and its photoelectric conversion efficiency was 8.8%.

Moreover, the total haze ratio at 800 nm of porous semiconductor layer 11 was measured in the same manner as in Example 1, and the value of 70% was obtained.

Furthermore, when the haze ratios at 800 nm of respective porous semiconductor layers 11a, 11b and 11c were measured in the same manner as in Example 1, the layer-thickness converted haze ratios were 3%, 29% and 70% respectively.

### (Comparative Example 2)

Suspension E (solution dispersed for 24 hours) was used for porous semiconductor layer 11a and suspension D (solution dispersed for 6 hours) was used for porous semiconductor layer 11b, while suspension C (solution dispersed for 4 hours) was used for porous semiconductor layer 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 28% and 40%.

A dye-sensitized solar cell was manufactured by using the same method as that of Example 1, and its photoelectric conversion efficiency was 7.7%.

Moreover, the total haze ratio at 800 nm of porous semiconductor layer 11 was measured in the same manner as in Example 1, and the value of 48% was obtained.

Furthermore, when the haze ratios at 800 nm of respective porous semiconductor layers 11a, 11b and 11c were measured in the same manner as in Example 1, the layer-thickness converted haze ratios were 4%, 29% and 39% respectively.

### (Example 11)

Suspension D (solution dispersed for 6 hours) was used for porous semiconductor layer 11a and suspension C (solution dispersed for 4 hours) was used for porous semiconductor layer 11b, while suspension A (solution dispersed for 30 minutes) was used for porous semiconductor layer 11c, and these were respectively fired under firing conditions [1] (heated at 450°C, under an oxygen flow of 5 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 28%, 40% and 81%.

A dye-sensitized solar cell was manufactured by using the same method as that of Example 1, and its photoelectric conversion efficiency was 7.9%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 29%, 42% and 81% respectively.

### (Example 12)

Suspension E (solution dispersed for 24 hours) was used for porous semiconductor layer 11a and suspension C (solution dispersed for 4 hours) was used for porous semiconductor layer 11b, while suspension A (solution dispersed for 30 minutes) was used for porous semiconductor layer 11c, and these were respectively fired under firing conditions [3] (heated at 500°C, under an oxygen flow of 5 ml/min) so that porous semiconductor layer 11 was formed.

The layer thickness of each of porous semiconductor layers 11a, 11b and 11c c was 5 µm, that is, 15 µm in the total of three layers, and when measured as a single layer, the haze ratios at 800 nm of porous semiconductor layers 11a, 11b and 11c were respectively 4%, 50% and 80%.

A dye-sensitized solar cell was manufactured by using the same method as that of Example 1, and its photoelectric conversion efficiency was 9.6%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 3%,50% and 81% respectively.

### (Example 13)

Suspension E (solution dispersed for 24 hours) was used for porous semiconductor layer 11 a and suspension C (solution dispersed for 4 hours) was used for porous semiconductor layer 11b, while suspension A (solution dispersed for 30 minutes) was used for porous semiconductor layer 11c, and these were respectively fired under firing conditions [6] (heated at 500°C, under a mixed gas flow of oxygen 1 ml/min and nitrogen 4 ml/min) so that porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 5%, 51% and 81%.

A dye-sensitized solar cell was manufactured by using the same method as that of Example 1, and its photoelectric conversion efficiency was 9.2%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b and 11c were measured in the same manner as in Example 1, the layer-thickness converted haze ratios were 3%, 51% and 81% respectively.

### (Example 14)

Porous semiconductor layer 11 was formed into a four-layer structure as shown in Fig. 3, and the four layers were defined as porous semiconductor layers 11 a, 11b, 11 c and 11d from the conductive supporting member side.

Suspension E (solution dispersed for 24 hours) was used for porous semiconductor layer 11a, suspension C (solution dispersed for 4 hours) was used for porous semiconductor layer 11b, suspension B (solution dispersed for 2 hours) was used for porous semiconductor layer 11c and suspension A (solution dispersed for 30 minutes) was used for porous semiconductor layer 11c, and these were then respectively fired under firing conditions [1] (heated at 450°C, under an oxygen flow of 5 ml/min) so that porous semiconductor layer 11 was formed.

The layer thickness of each of porous semiconductor layers 11a, 11b, 11c and 11d was 5 µm, that is, 20 µm in the total of four layers, and when measured as a single layer, the haze ratios at 800 nm of porous semiconductor layers 11a, 11b, 11c and 11d were respectively 3%, 40%, 72% and 81 %.

A dye-sensitized solar cell was manufactured by using the same method as that of Example 1, and its photoelectric conversion efficiency was 9.5%.

Moreover, the total haze ratio at 800 nm of porous semiconductor layer 11 was measured in the same manner as in Example 1, and the value of 81% was obtained.

Furthermore, when the haze ratios at 800 nm of respective porous semiconductor layers 11a, 11b, 11c and 11d were measured in the same manner as in Example 1, the layer-thickness converted haze ratios were 3%, 40%, 68% and 81% respectively.

### (Example 15)

The same preparation methods as those of suspension C and suspension E were carried out except that in the preparation methods of suspension C and suspension E, mixed particles of AMT-600 (particle size: about 30 nm) and JA-1 (particle size: about 180 nm), each having 50wt%, made by Teika Co., Ltd. were used as the titanium oxide particles for use in suspension formation, so that a suspension was prepared, and such a suspension obtained when dispersed in a paint shaker for 4 hours was defined as suspension C2, while such a suspension obtained when dispersed for 24 hours was defined as suspension E2.

Suspension E2 (solution with the mixed particles dispersed for 24 hours) was used for porous semiconductor layer 11 a, suspension C (solution dispersed for 4 hours) was used for porous semiconductor layer 11b, and suspension C2 (solution with the mixed particles dispersed for 4 hours) was used for porous semiconductor layer 11c, and these were then respectively fired under firing conditions [1] (heated at 450°C, under an oxygen flow of 5 ml/min) so that porous semiconductor layer 11 was formed. The layer thickness of each of porous semiconductor layers 11a, 11b and 11c was 5 µm, that is, 15 µm in the total of three layers.

A dye-sensitized solar cell was manufactured by using the same method as that of Example 1, and its photoelectric conversion efficiency was 9.1 %.

Moreover, the total haze ratio at 800 nm of porous semiconductor layer 11 was measured in the same manner as in Example 1, and the value of 78% was obtained.

Furthermore, when the haze ratios at 800 nm of respective porous semiconductor layers 11a, 11b and 11c were measured in the same manner as in Example 1, the layer-thickness converted haze ratios were 10%, 45% and 78% respectively.

### (Example 16)

The same preparation method as that of suspension G was carried out except that in the preparation method of suspension G, 10wt% of titanium oxide particles (trade name: JA-1, anatase-type; average primary particle size 180 nm, made by Teika Co., Ltd.) were added to the colloidal solution B to be stirred therein so that a suspension was prepared.

Concentration adjustments were carried out to prepare a final composition having 12wt% in titanium oxide concentration, 10wt% in ethylcellulose concentration and 62wt% in terpineol concentration so that a suspension I was prepared.

Suspension F was used for porous semiconductor layer 11a, suspension I was used for porous semiconductor layer 11b, and suspension G was used for porous semiconductor layer 11c, and these were then respectively fired under firing conditions [3] (heated at 500°C, under an oxygen flow of 5 ml/min) so that porous semiconductor layer 11 was formed. The layer thickness of each of porous semiconductor layers 11a, 11b and 11c was 5 µm, that is, 15 µm in the total of three layers.

A dye-sensitized solar cell was manufactured by using the same method as that of Example 1 except for the above-mentioned conditions, and its photoelectric conversion efficiency was 9.4%.

Moreover, the total haze ratio at 800 nm of porous semiconductor layer 11 was measured in the same manner as in Example 1, and the value of 83% was obtained.

Furthermore, when the haze ratios at 800 nm of respective porous semiconductor layers 11a, 11b and 11c were measured in the same manner as in Example 1, the layer-thickness converted haze ratios were 7%, 61% and 83% respectively.

### (Example 17)

The same preparation method as that of suspension I in Example 16 was carried out except that titanium oxide particles having an average primary particle size of 350 nm (made by Nano-Clean Science Co., Ltd.) were used in place of JA-1; thus, a suspension J was obtained.

Suspension F was used for porous semiconductor layer 11a, suspension J was used for porous semiconductor layer 11b, and suspension H was used for porous semiconductor layer 11c, and these were then respectively fired under firing conditions [3] (heated at 500°C, under an oxygen flow of 5 ml/min) so that porous semiconductor layers 11a, 11b and 11c were formed. The layer thickness of each of porous semiconductor layers 11a, 11b and 11c was 5 µm, that is, 15 µm in the total of three layers.

A dye-sensitized solar cell was manufactured by using the same method as that of Example 1 except for the above-mentioned conditions, and its photoelectric conversion efficiency was 9.6%.

Moreover, the total haze ratio at 800 nm of porous semiconductor layer 11 was measured in the same manner as in Example 1, and the value of 85% was obtained.

Furthermore, when the haze ratios at 800 nm of respective porous semiconductor layers 11a, 11b and 11c were measured in the same manner as in Example 1, the layer-thickness converted haze ratios were 7%, 65% and 85% respectively.

### (Example 18)

The same method as that of Example 3 was carried out except that in the preparation process of suspension F of Example 3, conditions of the particle growth in the autoclave made of titanium were changed to 250°C for 9 hours so that a colloidal solution containing titanium oxide particles having an average primary particle size of 350 nm was prepared.

By using this colloidal solution, the same preparation process of suspension F in Example 3 was carried out so that a suspension was prepared. Concentration adjustments were carried out to prepare a final composition having 10wt% in titanium oxide concentration, 10wt% in ethylcellulose concentration and 64wt% in terpineol concentration so that a suspension K was prepared.

Suspension F and suspension K were mixed with each other at a weight ratio of 9:1 so that a suspension L was prepared.

Suspension F was used for porous semiconductor layer 11a, suspension L was used for porous semiconductor layer 11b, and suspension K was used for porous semiconductor layer 11c, and these were then respectively fired under firing conditions [3] (heated at 500°C, under an oxygen flow of 5 ml/min) so that porous semiconductor layer 11 was formed. The layer thickness of each of porous semiconductor layers 11a, 11b and 11c was 5 µm, that is, 15 µm in the total of three layers.

A dye-sensitized solar cell was manufactured by using the same method as that of Example 1 except for the above-mentioned conditions, and its photoelectric conversion efficiency was 9.3%.

Moreover, the total haze ratio at 800 nm of porous semiconductor layer 11 was measured in the same manner as in Example 1, and the value of 86% was obtained.

Furthermore, when the haze ratios at 800 nm of respective porous semiconductor layers 11a, 11b and 11c were measured in the same manner as in Example 1, the layer-thickness converted haze ratios were 7%, 64% and 84% respectively.

### (Example 19)

Suspension I, prepared in Example 16, was applied onto a conductive supporting member by using a screen printing method, and this was then fired under firing conditions [3] (heated at 500°C, under an oxygen flow of 5 ml/min) so that porous semiconductor layer 11 was formed. The layer thickness was 15 µm.

A dye-sensitized solar cell was manufactured by using the same method as that of Example 1 except for the above-mentioned conditions, and its photoelectric conversion efficiency was 8.1%.

Moreover, the total haze ratio at 800 nm of porous semiconductor layer 11 was measured in the same manner as in Example 1, and the value of 72% was obtained.

Furthermore, when the haze ratio at 800 nm of porous semiconductor layer 11 (where a sample thickness was 15 µm) was measured in the same manner as in Example 1, the ratio was 72%.

### (Example 20)

A porous semiconductor layer was formed into a four-layer structure, and the four layers were defined as porous semiconductor layers 11a, 11b, 11c and 11d from the conductive supporting member side.

Suspension F was used for porous semiconductor layer 11a, suspension I was used for porous semiconductor layer 11b, suspension J was used for porous semiconductor layer 11c and suspension K was used for porous semiconductor layer 11d, and these were then respectively fired under firing conditions [1] (heated at 450°C, under an oxygen flow of 5 ml/min) so that porous semiconductor layer 11 was formed. The layer thickness of each of porous semiconductor layers 11a, 11b, 11c and 11d was 5 µm, that is, 20 µm in the total of four layers.

A dye-sensitized solar cell was manufactured by using the same method as that of Example 1, and its photoelectric conversion efficiency was 9.8%.

Moreover, the total haze ratio at 800 nm of porous semiconductor layer 11 was measured in the same manner as in Example 1, and the value of 83% was obtained.

Furthermore, when the haze ratios at 800 nm of respective porous semiconductor layers 11a, 11b, 11c and 11d were measured in the same manner as in Example 1, the layer-thickness converted haze ratios were 3%, 62%, 66% and 84% respectively.

### (Example 21)

Suspension F was used for porous semiconductor layer 11a, suspension I was used for porous semiconductor layer 11b, suspension J was used for porous semiconductor layer 11c and suspension H was used for porous semiconductor layer 11d, and these were then respectively fired under firing conditions [1] (heated at 450°C, under an oxygen flow of 5 ml/min) so that porous semiconductor layer 11 was formed. The layer thickness of each of porous semiconductor layers 11a, 11b, 11c and 11d was 5 µm, that is, 20 µm in the total of four layers.

A dye-sensitized solar cell was manufactured by using the same method as that of Example 1, and its photoelectric conversion efficiency was 9.7%.

Moreover, the total haze ratio at 800 nm of porous semiconductor layer 11 was measured in the same manner as in Example 1, and the value of 87% was obtained.

Furthermore, when the haze ratios at 800 nm of respective porous semiconductor layers 11a, 11b, 11c and 11d were measured in the same manner as in Example 1, the layer-thickness converted haze ratios were 3%, 62%, 66% and 85% respectively.

### (Example 22)

A porous semiconductor layer was formed into a five-layer structure as shown in Fig. 4, and the five layers were defined as porous semiconductor layers 11a, 11b, 11c, 11d and 11e from the conductive supporting member side.

Suspension F was used for porous semiconductor layer 11a, suspension C was used for porous semiconductor layer 11b, suspension I was used for porous semiconductor layer 11c, suspension J was used for porous semiconductor layer 11d and suspension K was used for porous semiconductor layer 11e, and these were then respectively fired under firing conditions [1] (heated at 450°C, under an oxygen flow of 5 ml/min) so that porous semiconductor layer 11 was formed. The layer thickness of each of porous semiconductor layers 11a, 11b, 11c, 11d and 11e was 5 µm, that is, 25 µm in the total of five layers.

A dye-sensitized solar cell was manufactured by using the same method as that of Example 1, and its photoelectric conversion efficiency was 9.8%.

Moreover, the total haze ratio at 800 nm of porous semiconductor layer 11 was measured in the same manner as in Example 1, and the value of 84% was obtained.

Furthermore, when the haze ratios at 800 nm of respective porous semiconductor layers 11a, 11b, 11c, 11d and 11e were measured in the same manner as in Example 1, the layer-thickness converted haze ratios were 3%, 50%, 62%, 66% and 84% respectively.

### (Example 23)

Porous semiconductor layer 11 was formed into a four-layer structure, and the four layers were defined as porous semiconductor layers 11 a, 11b, 11c and 11d from the conductive supporting member side.

Suspension F was used for porous semiconductor layer 11a, suspension C was used for porous semiconductor layer 11b, suspension I was used for porous semiconductor layer 11c and suspension J was used for porous semiconductor layer 11d, and these were then respectively fired under firing conditions [3] (heated at 500°C, under an oxygen flow of 5 ml/min) so that porous semiconductor layer 11 was formed. The layer thickness of each of porous semiconductor layers 11a, 11b, 11c and 11d was 5 µm, that is, 20 µm in the total of four layers.

A dye-sensitized solar cell was manufactured by using the same method as that of Example 1, and its photoelectric conversion efficiency was 9.0%.

Moreover, the total haze ratio at 800 nm of porous semiconductor layer 11 was measured in the same manner as in Example 1, and the value of 67% was obtained.

Furthermore, when the haze ratios at 800 nm of respective porous semiconductor layers 11a, 11b, 11c and 11d were measured in the same manner as in Example 1, the layer-thickness converted haze ratios were 3%, 42%, 62% and 66% respectively.

### (Comparative Example 3)

A porous semiconductor layer was formed into a three-layer structure, and the three layers were defined as porous semiconductor layers 11a, 11b and 11c respectively from the conductive supporting member side.

Suspension E (solution dispersed for 24 hours) was used for porous semiconductor layer 11a and suspension D (solution dispersed for 6 hours) was used for porous semiconductor layer 11b, and these were respectively fired under firing conditions [1] (heated at 450°C, under an oxygen flow of 5 ml/min), and suspension C (solution dispersed for 4 hours) was used for porous semiconductor layer 11c, and this was fired under firing conditions [9] (heated at 500°C, under a nitrogen flow of 5 ml/min); thus, porous semiconductor layer 11 was formed.

The layer thickness of each of porous semiconductor layers 11a, 11b and 11c was 5 µm, that is, 15 µm in the total of three layers, and when measured as a single layer, the haze ratios at 800 nm of porous semiconductor layers 11a, 11b and 11c were respectively 3%, 28% and 52%.

A dye-sensitized solar cell was manufactured by using the same method as that of Example 1 except for the above-mentioned conditions, and its photoelectric conversion efficiency was 7.8%.

Moreover, the total haze ratio at 800 nm of porous semiconductor layer 11 was measured in the same manner as in Example 1, and the value of 55% was obtained.

Furthermore, when the haze ratios at 800 nm of respective porous semiconductor layers 11a, 11b and 11c were measured in the same manner as in Example 1, the layer-thickness converted haze ratios were 3%, 29% and 51% respectively.

### (Comparative Example 4)

A porous semiconductor layer was formed into a four-layer structure, and the four layers were defined as porous semiconductor layers 11a, 11b, 11c and 11d from the conductive supporting member side.

Suspension E was used for porous semiconductor layer 11a, while suspension D was used for porous semiconductor layer 11b, so that these were respectively fired under firing conditions [3] (heated at 500°C, under an oxygen flow of 5 ml/min), suspension C was used for porous semiconductor layer 11c so that this was fired under firing conditions [1] (heated at 450°C, under an oxygen flow of 5 ml/min), and suspension C was used for porous semiconductor layer 11d so that this was fired under firing conditions [3] (heated at 500°C, under an oxygen flow of 5 ml/min); thus, porous semiconductor layer 11 was formed. The layer thickness of each of porous semiconductor layers 11a, 11b, 11c and 11d was 5 µm, that is, 20 µm in the total of four layers.

A dye-sensitized solar cell was manufactured by using the same method as that of Example 1, and its photoelectric conversion efficiency was 7.8%.

Moreover, the total haze ratio at 800 nm of porous semiconductor layer 11 was measured in the same manner as in Example 1, and the value of 57% was obtained.

Furthermore, when the haze ratios at 800 nm of respective porous semiconductor layers 11a, 11b, 11c and 11d were measured in the same manner as in Example 1, the layer-thickness converted haze ratios were 3%, 28%, 42% and 50% respectively.

### (Example 24)

A porous semiconductor layer was formed into a four-layer structure, and the four layers were defined as porous semiconductor layers 11a, 11b, 11c and 11d respectively from the conductive supporting member side.

Suspension F was used for porous semiconductor layer 11a, while suspension F was used for porous semiconductor layer 11b, so that these were respectively fired under firing conditions [3] (heated at 500°C, under an oxygen flow of 5 ml/min), suspension I was used for porous semiconductor layer 11c so that this was fired under firing conditions [3] (heated at 500°C, under an oxygen flow of 5 ml/min), and suspension K was used for porous semiconductor layer 11d so that this was fired under firing conditions [3] (heated at 500°C, under an oxygen flow of 5 ml/min); thus, porous semiconductor layer 11 was formed. The layer thickness of each of porous semiconductor layers 11a, 11b, 11c and 11d was 5 µm, that is, 20 µm in the total of four layers.

A dye-sensitized solar cell was manufactured by using the same method as that of Example 1, and its photoelectric conversion efficiency was 9.8%.

Moreover, the total haze ratio at 800 nm of porous semiconductor layer 11 was measured in the same manner as in Example 1, and the value of 85% was obtained.

Furthermore, when the haze ratios at 800 nm of respective porous semiconductor layers 11a, 11b, 11c and 11d were measured in the same manner as in Example 1, the layer-thickness converted haze ratios were 3%, 4%, 62% and 84% respectively.

**[Table 5]**

| | Haze ratio of porous semiconductor layer 11a | Haze ratio of porous semiconductor layer 11b | Haze ratio of porous semiconductor layer 11c | Haze ratio of porous semiconductor layer 11d | Haze ratio of porous semiconductor layer 11e |
|---|---|---|---|---|---|
| Example 1 | 5 | 82 | - | - | - |
| Example 2 | 4 | 72 | - | - | - |
| Example 3 | 8 | 84 | - | - | - |
| Example 4 | 8 | 86 | - | - | - |
| Example 5 | 5 | 53 | 82 | - | - |
| Example 6 | 4 | 6 | 82 | - | - |
| Example 7 | 4 | 43 | 81 | - | - |
| Example 8 | 5 | 74 | 82 | - | - |
| Example 9 | 5 | 82 | 82 | - | - |
| Example 10 | 4 | 43 | 72 | - | - |
| Example 11 | 42 | 53 | 82 | - | - |
| Example 12 | 4 | 56 | 82 | - | - |
| Example 13 | 4 | 57 | 82 | - | - |
| Example 14 | 4 | 51 | 69 | 82 | - |
| Example 15 | 10 | 55 | 79 | - | - |
| Example 16 | 8 | 66 | 84 | - | - |
| Example 17 | 8 | 67 | 86 | - | - |
| Example 18 | 8 | 66 | 85 | - | - |
| Example 19 | 66 | - | - | - | - |
| Example 20 | 4 | 64 | 69 | 85 | - |
| Example 21 | 4 | 65 | 69 | 86 | - |
| Example 22 | 4 | 59 | 64 | 69 | 85 |
| Example 23 | 5 | 53 | 66 | 69 | - |
| Example 24 | 4 | 5 | 65 | 85 | - |
| Comparative Example 1 | 4 | 56 | - | - | - |
| Comparative Example 2 | 5 | 43 | 50 | - | - |
| Comparative Example 3 | 5 | 43 | 58 | - | - |
| Comparative Example 4 | 4 | 43 | 50 | 59 | - |

**[Table 6]**

| | Haze ratio of porous semiconductor layer 11a | Haze ratio of 2 layers of porous semiconductor layers 11a and 11b | Haze ratio of 3 layers of porous semiconductor layers 11a, 11b and 11c | Haze ratio of 4 layers of porous semiconductor layers 11a, 11b, 11c and 11d | Haze ratio of 5 layers of porous semiconductor layers 11a, 11b, 11c, 11d and 11e |
|---|---|---|---|---|---|
| Example 7 | 3 | 30 | 81 | - | - |
| Example 12 | 3 | 52 | 81 | - | - |
| Example 14 | 3 | 41 | 69 | 81 | - |
| Example 17 | 7 | 66 | 85 | - | - |
| Example 22 | 3 | 52 | 63 | 67 | 84 |

### (Summary of Examples 1 to 24) These Examples indicate the following facts.

1. In a photovoltaic cell having a porous semiconductor layer 11 on which a dye is adsorbed, in order to obtain a high photoelectric conversion efficiency, it is important to specify the haze ratio of porous semiconductor layer 11 in a near infrared region (preferably, 780 to 900 nm).
2. Based upon the above-mentioned 1 and the results of Examples (for example, Examples 14, 23 and the like), by setting the total haze ratio in the near infrared region, in particular, to a range from 60% to 95% (preferably, from 70% to 95%), it is possible to obtain a photovoltaic cell having a high photoelectric conversion efficiency. The maximum value 95% was specified by the maximum value of the haze ratio experimentally obtained in the present Examples.
3. Based upon the results of the above-mentioned 2 and the idea that in order to efficiently confine light in porous semiconductor layer 11, porous semiconductor layer 11 is preferably made of a plurality of porous semiconductor layers having different haze ratios, with the haze ratios being successively increased from the light incident side (refer to the description concerning "haze ratio" in [Embodiment 2] of the present invention), by setting the haze ratio in the near infrared region of the porous semiconductor layer formed farthest from the light incident side to a range from 60% to 95% (preferably, to a range from 70% to 95%) in porous semiconductor layer 11 made of a plurality of layers, it is possible to obtain a photovoltaic cell having a high photoelectric conversion efficiency. This fact was confirmed through the experiments.
4. For example, based upon the results of Example 11 and Example 15, when the haze ratio in the near infrared region of porous semiconductor layer 11a located closest to the light incident side is set to 10%, it is possible to obtain a high photoelectric conversion efficiency. Therefore, in porous semiconductor layer 11 made of a plurality of layers, a preferable range of the haze ratio in the near infrared region of the layer in the porous semiconductor layer located closest to the light incident side is given as a range of 1% or more and less than 11 %. The minimum value 1% was specified based upon values experimentally obtained during measurements of the total haze ratio (because the value of haze ratio in a general conductive supporting member (for example, a glass plate with SnO₂ being vapor deposited thereon) is about 1 %).
5. Based upon the above-mentioned 3 and 4, in a case where porous semiconductor layer 11 is made of three layers, the haze ratio in the near infrared region of porous semiconductor layer 11a located closest to the light incident side is preferably set in a range of 1% or more and less than 11 %, and the haze ratio in the near infrared region of porous semiconductor layer 11c located farthest from the light incident side is preferably set in a range from 60% to 95% (more preferably, from 70% to 95%).
6. In the same manner as in the above-mentioned 5, in a case where porous semiconductor layer 11 is made of four layers, the haze ratio in the near infrared region of porous semiconductor layer 11a located closest to the light incident side is preferably set in a range of 1% or more and less than 11 %, and the haze ratio in the near infrared region of porous semiconductor layer 11d located farthest from the light incident side is preferably set in a range from 60% to 95% (more preferably, from 70% to 95%).
7. In the same manner as in the above-mentioned 5 and 6, in a case where porous semiconductor layer 11 is made of five layers, the haze ratio in the near infrared region of porous semiconductor layer 11a located closest to the light incident side is preferably set in a range of 1% or more and less than 11 %, and the haze ratio in the near infrared region of porous semiconductor layer 11e located farthest from the light incident side is preferably set in a range from 60% to 95% (more preferably, from 70% to 95%).
8. Based upon the results of the above-mentioned 3 as well as 5, 6 and 7, in a case where porous semiconductor layer 11 is made of a plurality of layers, the haze ratio in the near infrared region of a layer in the porous semiconductor layer located closest to the light incident side is preferably set in a range of 1% or more and less than 11%, and the haze ratio in the near infrared region of a layer in the porous semiconductor layer located farthest from the light incident side is preferably set in a range from 60% to 95% (more preferably, from 70% to 95%).

The following description will discuss the results of tests in which a porous semiconductor layer was formed by using a suspension in which only the particle size is determined as Comparative Examples 5 to 7.

### (Comparative Examples 5 to 7: Formation of Porous Semiconductor Layers by the Use of the Conventional Art)

The same method as that described in Journal of American Ceramic Society, Vol. 80, page 3157, was used except that the temperature of an autoclave was set to 240°C so that titanium oxide having 10wt% in titanium oxide concentration was obtained. The average particle size of the resulting titanium oxide particles (particle A) was about 16 nm. To this dispersion solution of titanium oxide particles were added 20wt% to the titanium oxide of polyethylene glycol (made by Wako Pure Chemical Industries, Ltd. molecular weight: 20,000) and 10wt% to the entire solution of ethanol. To this was further added nitric acid to adjust the pH to 1.3% so that a coating solution A was obtained. The solid component of this coating solution was 10.7%, and the content of titanium oxide was 8.9%.

To 11.2 g of coating solution A was added 0.2 g of anatase-type titanium oxide (particle B: particle size 100 nm to 300 nm) made by Kanto Chemical Co., Inc. to be mixed therein, and these were dispersed by a paint shaker for 3 hours so that a coating solution B was obtained.

Anatase-type titanium oxide (6.7 g) (particle B: particle size 100 nm to 300 nm) made by Kanto Chemical Co., Inc., polyethylene glycol (2.0 g) (made by Wako Pure Chemical Industries, Ltd., molecular weight: 20,000), ethanol (2.6 g) and distilled water (53 ml) were mixed and dispersed by a paint shaker for 3 hours so that a coating solution C was obtained.

Coating solution A was used for porous semiconductor layer 11a, coating solution B was used for porous semiconductor layer 11b, and coating solution C was used for porous semiconductor layer 11c, and these were then respectively fired under firing conditions [1] (heated at 450°C, under an oxygen flow of 5 ml/min). The layer thickness of each of porous semiconductor layers 11a, 11b and 11c was 5 µm, that is, 15 µm in the total thickness of three layers.

Three dye-sensitized solar cells were manufactured; however, the respective photoelectric conversion efficiencies were 6.3% (Comparative Example 5), 6.5% (Comparative Example 6) and 6.2% (Comparative Example 7), failing to obtain a high conversion efficiency.

Moreover, samples having a thickness of 10 µm were formed from these three solar cells in the same manner as in Example 1, and the haze ratios at 800 nm of photoelectric conversion layers 11a, 11b and 11c were measured, and the resulting layer-thickness converted haze ratios were: 2%, 10% and 50% (in Comparative Example 5); 13%, 55% and 45% (in Comparative Example 6); 11 %, 33% and 42% (in Comparative Example 7); thus, it is found that, even when only the particle size of the semiconductor particles in a material solution (suspension) of porous semiconductor layer 11 is specified, optical characteristics (haze ratio in this case) of porous semiconductor layer 11 and characteristics of a photovoltaic cell are not determined univocally (see Table 7).

It is to be understood that while the embodiments and examples disclosed above illustrate the present invention, they are exemplary only and not restrictive. The scope of the present invention is indicated not by the above-mentioned description, but by the following claims, and variations are not to be regarded as a departure from the spirit and scope of the invention, and all such modifications are intended to be included within the scope of the following claims.

**[Table 7]**

| | Total haze ratio of porous semiconductor layer 11 | Haze ratio of porous semiconductor layer 11a made from coating solution A | Haze ratio of porous semiconductor layer 11b made from coating solution B | Haze ratio of porous semiconductor layer 11c made from coating solution C | Conversion efficiency (%) |
|---|---|---|---|---|---|
| Comparative Example 5 | 50 | 2 | 10 | 50 | 6.3 |
| Comparative Example 6 | 52 | 13 | 55 | 45 | 6.5 |
| Comparative Example 7 | 41 | 11 | 33 | 42 | 6.2 |

### Industrial Applicability

The photovoltaic cell of the present invention can be desirably applied to, for example, various sensors, dye-sensitizing type solar cells and the like.

## Claims

1. A photovoltaic cell comprising:
a photoelectric conversion layer made of a porous semiconductor layer with dye;
a carrier transporting layer; and
a pair of electrodes, wherein
said porous semiconductor layer of said photoelectric conversion layer has a haze ratio in a near infrared region ranging from 60% to 95%.

2. The photovoltaic cell according to claim 1, wherein said porous semiconductor layer is made of a plurality of layers having different haze ratios in the near infrared region.

3. The photovoltaic cell according to claim 2, wherein said porous semiconductor layer made of said plurality of layers are arranged such that the haze ratios in the near infrared region are successively increased from a light incident side.

4. The photovoltaic cell according to claim 3, wherein in said porous semiconductor layer made of said plurality of layers, the layer in said porous semiconductor layer located farthest from the light incident side has a haze ratio in the near infrared region ranging from 60% to 95%.

5. The photovoltaic cell according to claim 4, wherein said porous semiconductor layer is made of three layers and the layer in said porous semiconductor layer located closest to the light incident side has a haze ratio in the near infrared region of 1% or more and less than 11 %, while the layer in said porous semiconductor layer located farthest from the light incident side has a haze ratio in the near infrared region ranging from 60% to 95%.

6. The photovoltaic cell according to claim 4, wherein said porous semiconductor layer is made of four layers and the layer in said porous semiconductor layer located closest to the light incident side has a haze ratio in the near infrared region of 1% or more and less than 11%, while the layer in said porous semiconductor layer located farthest from the light incident side has a haze ratio in the near infrared region ranging from 60% to 95%.

7. The photovoltaic cell according to any one of claims 1 to 6, wherein said porous semiconductor layer is made of an oxide semiconductor mainly composed of titanium oxide.

8. The photovoltaic cell according to any one of claims 1 to 6, wherein said haze ratio is a value measured by using any one of wavelengths in a range from 780 nm to 900 nm.

9. The photovoltaic cell according to claim 7, wherein said haze ratio is a value measured by using any one of wavelengths in a range from 780 nm to 900 nm.

10. A solar cell which uses the photovoltaic cell according to any one of claims 1 to 6.
